(19) Europäisches Patentamt / European Patent Office / Office européen des brevets

(11) **EP 1 884 527 B1**

(12) **EUROPEAN PATENT SPECIFICATION**

(45) Date of publication and mention
of the grant of the patent:
**28.10.2015 Bulletin 2015/44**

(21) Application number: **06746748.0**

(22) Date of filing: **23.05.2006**

(51) Int Cl.:
*C08F 10/02* (2006.01)  *C08F 4/654* (2006.01)
*F16L 9/12* (2006.01)  *C08F 210/16* (2006.01)
*F16L 9/127* (2006.01)

(86) International application number:
**PCT/JP2006/310264**

(87) International publication number:
**WO 2006/126547 (30.11.2006 Gazette 2006/48)**

(54) **POLYETHYLENE RESIN, PROCESS FOR PRODUCING THE SAME, AND A PIPE AND JOINT COMPRISING THE RESIN**

POLYETHYLENHARZ, HERSTELLUNGSVERFAHREN DAFÜR SOWIE ROHR UND VERBINDUNGSSTÜCK UMFASSEND DAS HARZ

RÉSINE DE POLYÉTHYLÈNE, SON PROCÉDÉ DE FABRICATION, ET TUYAU ET JOINT COMPRENANT LA RÉSINE

(84) Designated Contracting States:
**DE**

(30) Priority: **23.05.2005 JP 2005150272**

(43) Date of publication of application:
**06.02.2008 Bulletin 2008/06**

(73) Proprietor: **Japan Polyethylene Corporation Tokyo 100-8251 (JP)**

(72) Inventors:
• **SAITO, Shigeki**
**Kanagawa 210-8548 (JP)**
• **SASAKI, Yoshito**
**Kanagawa 210-8548 (JP)**
• **YOSHIKIYO, Tetsuya**
**Kanagawa 210-8548 (JP)**
• **NISHIBU, Hirofumi**
**Kanagawa 210-8548 (JP)**

(74) Representative: **Vossius & Partner Patentanwälte Rechtsanwälte mbB Siebertstrasse 3 81675 München (DE)**

(56) References cited:
EP-A- 0 533 154    EP-A- 1 584 852
JP-A- 07 126 316    JP-A- 07 258 326
JP-A- 07 258 327    JP-A- 10 182 742
JP-A- 2003 212 924    US-A1- 2003 088 021

**Description**

TECHNICAL FIELD

The present invention relates to a polyethylene resin, especially a resin having excellent durability in pipe applications, a process for producing the resin, and a pipe and a joint each comprising the resin. More particularly, the invention relates to a polyethylene resin having excellent in slow crack growth (SCG) property, especially a resin suitable for use as a water distribution pipe, a process for producing the resin, and a pipe and a joint each comprising the resin.

The polyethylene resin obtained by the process of the present invention and the pipe and joint are excellent in balance between moldability and mechanical properties including rigidity and SCG and also in homogeneity and are hence suitable for use in a wide range of pipe applications including a water distribution pipe, a sewer pipe, and a pipe for rehabilitation.

BACKGROUND ART

A polyethylene resin is excellent in moldability and various properties and has high economic efficiency and suitability for environmental issue. The polyethylene resin is hence used as an important material in an extremely wide range of technical fields and used in various applications.

One field among these applications is the field of pipe. Based on actual results concerning durability in earthquakes, use of the resin is spreading to a gas pipe, a water distribution pipe, etc.

At present, the resin for use as a gas pipe, a water distribution pipe, or the like should satisfy excellent long-term durability such as PE80 (MRS, minimum required strength = 8 MPa) or PE100 (MRS = 10 MPa) as provided for in ISO 9080 and ISO 12162. However, with recent changes in construction method of pipe laying, a polyethylene resin giving a molded pipe which has excellent long-term durability even when the pipe surface has a scar, i.e., which has excellent in slow crack growth (SCG) property as in a notch pipe test provided for in ISO 13479, has come to be desired.

Such polyethylene resin for use as a pipe is being produced by copolymerizing ethylene and one or more α-olefins by a multistage polymerization in the presence of a Phillips catalyst or a Ziegler catalyst. However, the polyethylene resin produced with a Phillips catalyst has a drawback concerning long-term durability because this generally has a long chain branching. The polyethylene resin for high-durability water distribution pipe satisfying PE100 is produced entirely with the latter catalyst, i.e., a Ziegler catalyst.

There are many prior art documents concerning a polyethylene resin for pipe use obtained by copolymerizing ethylene and one or more α-olefins by a multistage polymerization using a Ziegler catalyst. However, it is exceedingly difficult to produce a polyethylene resin which satisfies PE100 standard and is excellent in SCG, rigidity, flowability, homogeneity, etc.

For example, a polyethylene pipe excellent in stress cracking resistance property and fracture toughness has been proposed, which is made of an ethylene polymer comprising a high-molecular component in which a comonomer has been selectively introduced at the high-molecular weight side and a low-molecular component (patent document 1). However, this has a poor balance between flowability and stress cracking resistance property. To enhance the stress cracking resistance property results in poor flowability.

Patent Document 1: JP-A-8-301933

Furthermore, a polyethylene resin, a pipe, and a pipe joint developed by directing attention to a tie molecule have been proposed (patent documents 2 to 6). However, since the tie molecule is not the only factor which governs SCG, a high tie molecule existence probability (patent document 2) or a high tie molecule formation probability (patent documents 3 and 4) does not bring about high SCG. JP-A-2000-109521 (patent document 5) proposes a polyethylene pipe in which the amount of a component, which is obtained by cross fractionation and has a molecular weight of 100,000 or higher and an elution temperature of 90°C or higher, satisfies a certain relationship (patent document 5). Moreover, a multimodal polyethylene obtained by producing an ethylene homopolymer of a low-molecular weight component and then producing an ethylene copolymer of a high molecular weight has been proposed (patent document 6). However, these polyethylenes each have a poor balance between flowability and SCG because 1-butene is used as a comonomer in Examples therein.

Patent Document 2: JP-A-9-286820

Patent Document 3: JP-A-11-228635

Patent Document 4: JP-A-2003-64187

Patent Document 5: JP-A-2000-109521

Patent Document 6: JP-T-2002-519496 (The term "JP-T" as used herein means a published Japanese translation of a PCT patent application.)

Because of these, a polyethylene which is bimodal polyethylene comprising a low-molecular weight component and a high-molecular weight component and employs 1-hexene as a comonomer has been recently proposed (patent documents 7 and 8). This polyethylene is expected to have improved SCG. However, the Examples in each of those patent documents each employ a so-called reverse two-stage polymerization in which a low-molecular weight ethylene homopolymer is produced first and a high-molecular weight ethylene/1-hexene copolymer is then produced. Compared to a so-called regular two-stage polymerization in which a low-molecular weight is produced afterahigh-molecularweight, theprocessproposedhasdrawbacks that an apparatus for purging away unreacted hydrogen after theproduction of the low-molecularweight component is necessary and that the mixture of the low-molecular weight component and high-molecular weight component has poor homogeneity.

Patent Document 7: JP-T-2003-504442

Patent Document 8: JP-T-2003-531233

Furthermore, a pipe made of a polyethylene produced with a metallocene catalyst other than a Ziegler catalyst has been proposed in JP-A-11-199719 (patent document 9), which comprises: a high-molecular weight component in which in cross fractionation approximated straight line of a temperature-molecular weight has a gradient of from -0.5 to 0; and a low-molecular weight component. However, due to the use of a metallocene catalyst, each component has a narrow molecular-weight distribution as compared with the case of using a Ziegler catalyst and deteriorate moldability and homogeneity.

Patent Document 9: JP-A-11-199719

Patent Document 10: EP 1 584 852 discloses a pressureless pipe and polymer composition for making such a pipe as well as the use of the polymer composition for pressureless pipes and supplementary parts. The polymer composition is characterised in that the polymer comprises a multimodal ethylene polymer including a copolymer of ethylene and a $C_4$-$C_{10}$ $\alpha$-olefin comonomer; the ethylene polymer has a total density of at least 950 kg/m$^3$ and a MFR$_5$ of 0.2-2.0 g/10 min; the ethylene polymer has a modulus of elasticity, determined according to ISO 178 of more than 1200 MPa; the ethylene polymer has a resistance to slow crack growth, determined according to ASTM F 1473 of more than 1.5 hrs.

Patent Document 11: US 2003/088021 discloses specific blend compositions containing a homopolymer. The blend can be obtained by dry or melt mixing the already produced components, or through in-situ production by in parallel and/or in series arranged reactors. These resins can be used in applications such as films, blow molded, injection molded, and rotomolded articles, fibres, and cable and wire coatings and jacketings and, various forms of pipe.

Patent Document 12: EP 0 533 154 discloses ethylene polymer blends of a virgin or recycled low molecular weight ethylene polymer produced from a chromium-based catalyst and a high molecular weight ethylene polymer produced from a titanium-based catalyst. These ethylene polymer blends are useful for use in bottle, film, pipe, and/or drum applications.

Patent Document 13: JP 07258326 discloses an ethylene copolymer obtained by copolymerizing ethylene with an alpha-olefin in the presence of a catalyst system comprising a specific solid catalyst component and an organoaluminum compound in specific 2 stages.

Patent Document 14: JP 07 258327 discloses an ethylene copolymer obtained by copolymerizing ethylene with an alpha-olefin in the presence of a catalyst system comprising a specific solid catalyst component and an organoaluminum compound through specific 2 stages.

DISCLOSURE OF THE INVENTION

PROBLEMS THAT THE INVENTION IS TO SOLVE

Under these circumstances, an object of the present invention is to provide: a polyethylene resin which not only satisfies PE100 in the field of pipe, in particular, a water distribution pipe, but is excellent especially in slow crack growth (SCG) property and sufficient in flowability, homogeneity, etc.; a process for producing the resin; and a pipe/joint comprising the resin.

MEANS FOR SOLVING THE PROBLEMS

In order to overcome the problems described above, the present inventors made discussions and investigations with respect to the polyethylene resin produced with a Ziegler catalyst mainly on the specification of various properties of a polyethylene polymer and on a formation of the polymer composition, copolymerization with $\alpha$-olefins, combinations of copolymers, etc. to determine a material capable of solving the problems described above. As a result, they have found that a polyethylene resin as defined below which has an HLMFR and a density in respective specified ranges, in which a breaking time measured by notched Lander ESCR is specified with the HLMFR and the $\alpha$-olefin content is effective in solving the problems and has excellent properties when used as a pipe and a joint.

Specifically, the polyethylene resin of the present invention is characterized by defining the HLMFR, the density, and the $\alpha$-olefin content and having a constitution specified by notched Lander ESCR. More preferably, this resin is further characterized by comprising a combination of specific α-olefin copolymers and being obtained by a specific multistage polymerization method. In particular, this resin gives a molded pipe satisfying PE100 and having highly excellent SCG.

Namely, the present invention relates to the following (1) to (6).

(1) A polyethylene resin (A) for a pipe, which satisfies the following requirements (a) to (d):

(a) a high-load melt flow rate (HLa) is 5 to 20 g/10 min;
(b) a density (Da) is 0.945 to 0.965 g/cm$^3$ ;
(c) a content of an α-olefin having 3 to 12 carbon atoms (Ca) is 0.05 to 1.5 mol%; and
(d) a breaking time (T) measured by notched Lander ESCR, the HLa, and the Ca satisfy the following formula:

$$\log T \geq -2.9 \times \log HLa + 5.1 \times \log Ca + 6.8$$

wherein the polyethylene resin (A) comprises:

(B) a polyethylene polymer having a high-load melt flow rate (HLb) of 0.01 to 3 g/10 min and a content of α-olefin having 3 to 12 carbon atoms (Cb) of 3.0 mol% or lower, the amount ratio for polymerization (Xb) of the polymer (B) being 20 to 60% by weight; and
(C) a polyethylene polymer having a melt flow rate (MFRc) of 1 to 1,000 g/10 min and a content of α-olefin having 3 to 12 carbon atoms (Cc) of 0.5 mol% or lower, the amount ratio for polymerization (Xc) of the polymer (C) being 40 to 80% by weight;
wherein the polyethylene polymer (B) and the polyethylene polymer (C) comprise a main α-olefin having 6 or more and 12 or less carbon atoms, the main α-olefin being the α-olefin which gives short branches existing in a largest number;
wherein the polyethylene polymer (C) and the polyethylene polymer (B) satisfy the following relationship:

(α-olefin content of the polyethylene polymer (C)) / (α-olefin content of the polyethylene polymer (B)) ≤ 0.20;

wherein the polyethylene resin (A) is one produced by a regular multistage polymerization which comprises:

first producing the polyethylene polymer (B);
subsequently transferring the reaction liquid containing the polyethylene polymer (B) to a next polymerization reaction vessel directly; and
producing the polyethylene polymer (C);
and wherein the polyethylene resin is one obtained by a multistage polymerization using a Ziegler catalyst.

(2) The polyethylene resin of item 1, wherein a value obtained by dividing a ratio of chains (Tβδ) where two main α-olefins having 6 or more and 12 or less carbon atoms in the polyethylene resin are successive to chains (Tδδ) where a main α-olefin having 6 or more and 12 or less carbon atoms in the polyethylene resin is isolated by the content of α-olefin having 3 to 12 carbon atoms is 0.15 or smaller.

(3) The polyethylene resin of item 1 or 2, wherein the breaking time (T) measured by notched Lander ESCR, the HLa, and the Ca in the requirement (d) satisfy the following formula:

$$T \geq 10^{\wedge}(-2.9 \times \log HLa + 5.1 \times \log Ca + 6.8) + 50.$$

(4) An article obtainable by molding the polyethylene resin of any of items 1 to 3, wherein the article is selected from a pipe and a joint.

(5) A process for producing a polyethylene resin for a pipe according to item 1,
wherein producing a polyethylene polymer (B) having a high-load melt flow rate (HLb) of 0.01 to 3 g/10 min and a content of α-olefins having 3 to 12 carbon atoms (Cb) of 3.0 mol% or lower, as a high-molecular weight component, in one or more preceding reactors in a polymerization apparatus comprising two or more serially connected reactors, using a Ziegler catalyst containing at least titanium and magnesium, wherein the polymer (B) is produced in an amount ratio for polymerization (Xb) of 20 to 60% by weight;

subsequently transferring the reaction liquid containing the polyethylene polymer (B) to a next reactor; and producing a polyethylene polymer (C) having a melt flow rate (MFRc) of 1 to 1,000 g/10 min and a content of $\alpha$-olefins having 3 to 12 carbon atoms (Cc) of 0.5 mol% or lower as a low-molecular weight component by a continuous suspension polymerization, wherein the polymer (C) is produced in an amount ratio for polymerization (Xc) of 40 to 80% by weight.

(6) The process for producing a polyethylene resin of item 5 , wherein the breaking time (T) measured by notched Lander ESCR, the HLa, and the Ca in the requirement (d) satisfy the following formula:

$$T \geq 10\textasciicircum(-2.9 \times \log HLa + 5.1 \times \log Ca + 6.8) + 50.$$

## ADVANTAGES OF THE INVENTION

The polyethylene resin of the present invention has highly excellent durability for its flowability (HLMFR) and $\alpha$-olefin content (influencing density; index to rigidity). The invention can provide a pipe and a joint, which not only satisfy PE100 in the field of pipe, in particular, a water distribution pipe, but are highly excellent in slow crack growth (SCG) property and are excellent in flowability, moldability, rigidity, and homogeneity.

## BRIEF DESCRIPTION OF THE DRAWINGS

[Fig. 1] A figure showing a correlation between notched Lander ESCR (improved Lander ESCR) and SCG (notch pipe test)

[Fig. 2] A graph showing a relationship between the notched Lander ESCR and the value of the formula $10\textasciicircum(-2.9 \times \log HLa + 5.1 \times \log Ca + 6.8) + 50$

## BEST MODE FOR CARRYING OUT THE INVENTION

Means of the present invention for solving the problems have been generally described in accordance with the basic constitutions of the present invention. Embodiments of the invention will specifically be explained below in detail.

1. Constituent Elements in Polyethylene Resin (A)

The polyethylene resin (A) of the present invention have properties as described above which satisfy the following: (a) a high-load melt flow rate (HLMFR; HLa) is 5 to 20 g/10 min; (b) a density (Da) is 0.945 to 0.965 g/cm$^3$; (c) an $\alpha$-olefin content (Ca) is 0.05 to 1.5 mol%; and (d) a breaking time (T) measured by notched Lander ESCR, the HLa, and the Ca satisfy the following formula:

$$\log T \geq -2.9 \times \log HLa + 5.1 \times \log Ca + 6.8.$$

(1) HLMFR

The polyethylene resin (A) of the present invention has (a) a high-load melt flow rate (HLMFR; HLa), as measured at a temperature of 190°C under a load of 211.82 kgm/s$^2$ (21.6 kgf), in the range of 5 to 20 g/10 min, preferably 7 to 15 g/10 min.

In case where the HLMFR thereof is lower than 5 g/10 min, there is a possibility that flowability might decrease.

In case where the HLMFR thereof exceeds 20 g/10 min, there is a possibility that this resin might be poor in long-term durability, such as SCG and notched Lander ESCR, and in sagging during pipe molding (non-sagging property).

High-load melt flow rate is measured at a temperature of 190°C under a load of 211.82 N in accordance with JIS K-7210 (1996), Table 1, condition 7.

The high-load melt flow rate can be increased or decreased by changing a polymerization temperature or an amount of a chain transfer agent. Namely, by elevating the polymerization temperature at which ethylene is polymerized

with an $\alpha$-olefin, a molecular weight is decreased and, as a result, a high-loadmelt flow rate can be increased. By lowering the polymerization temperature, a molecular weight is increased and, as a result, a high-load melt flow rate can be decreased.

Furthermore, by increasing an amount of hydrogen (an amount of a chain-transfer agent) to be coexisted in a copolymerization reaction of ethylene with an $\alpha$-olefin, a molecular weight is decreased and, as a result, a high-load melt flow rate can be increased. By decreasing an amount of hydrogen (an amount of a chain-transfer agent) to be coexisted, a molecular weight is increased, as a result, a high-load melt flow rate can be decreased.

(2) Density

The polyethylene resin (A) of the present invention has a density (Da) in the range of 0.945 to 0.965 g/cm$^3$, preferably 0.947 to 0.960 g/cm$^3$.

In case where the density thereof is lower than 0.945 g/cm$^3$, there is a possibility that rigidity might decrease. In case where the density thereof exceeds 0.965 g/cm$^3$, there is a possibility that this resin might be poor in long-term durability, such as SCG and notched Lander ESCR.

Density is measured in accordance with JIS K-7112 (1996).

The density can be increased or decreased by increasing or decreasing an amount of an $\alpha$-olefin (number of short branches) to be copolymerized with ethylene.

(3) $\alpha$-Olefin Content

The polyolefin resin (A) of the present invention has a content of an $\alpha$-olefin having 3 to 12 carbon atoms (Ca) in the range of 0.05 to 1.5 mol%, preferably 0.1 to 1.0 mol%.

In case where the $\alpha$-olefin content thereof is lower than 0.05 mol%, there is a possibility that long-term durability, such as SCG and notched Lander ESCR, might decrease. In case where the $\alpha$-olefin content thereof exceeds 1.5 mol%, there is a possibility that this resin might have poor rigidity. The term $\alpha$-olefin content herein means the content of not only the $\alpha$-olefin fed to the reactor in polymerization and copolymerized but also a short branch (e.g., an ethyl branch and a methyl branch) formed as by-product.

$\alpha$-Olefin content is measured by $^{13}$C-NMR.

The $\alpha$-olefin content can be increased or decreased by increasing or decreasing an amount of the $\alpha$-olefin to be fed and copolymerized with ethylene.

(4) Notched Lander ESCR

In the polyethylene resin (A) of the present invention, the breaking time (T) measured by notched Lander ESCR, the HLMFR (HLa), and the $\alpha$-olefin content (Ca) satisfies the following formula:

$$\log T \geq -2.9 \times \log HLa + 5.1 \times \log Ca + 6.8.$$

Preferably, $\log T \geq -2.9 \times \log HLa + 5.1 \times \log Ca + 6.9$.

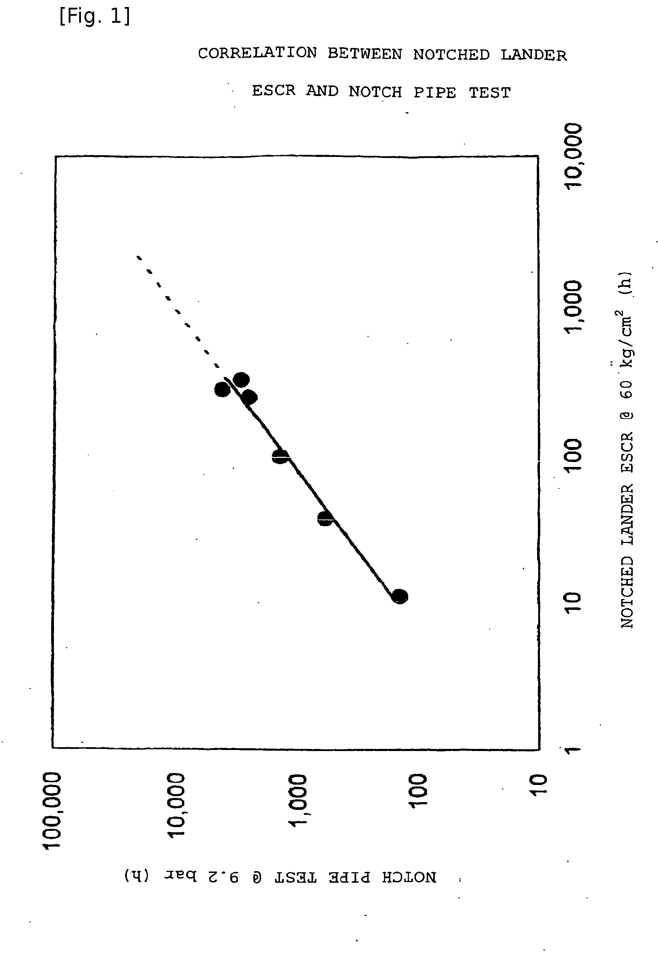

The present inventors devised the notched Lander ESCR, which has an excellent correlation with a notch pipe test and can be evaluated using a small sample amount in a short time period. Fig. 1 shows a correlation between the both data; this correlation is highly excellent. The notched Lander ESCR is sufficiently usable as a method for evaluating long-term durability, and a breaking time (T) can be an index to long-term durability. The present inventors further made investigations on a relationship among the breaking time measured by notched Lander ESCR, the HLMFR, and the $\alpha$-olefin content. Namely, although decreasing the HLMFR (i.e., heightening the molecular weight) or increasing the $\alpha$-olefin content generally improves the breaking time measured by notched Lander ESCR, which is an index to long-term durability, they respectively bring about a decrease in flowability and a decrease in rigidity. From comparative investigations on polyethylene including those presently in use which are shown in Comparative Examples, it has been found that a polyethylene resin satisfying the formula shown above not only has excellent SCG but has both of better flowability and rigidity than polyethylene presently in use as polyethylene resin for a pipe.

The notched Lander ESCR herein means the property determined with the constant-stress environmental stress cracking tester as provided for in JIS K 6922-2: 1997, appendix, using a 1 wt% aqueous solution of a sodium higher alcoholsul fonate as a test liquid under the conditions of a test temperature of 80°C and an initial tensile stress of 60 kg/cm$^2$. As a test piece is used a pressed sheet having a thickness of 1 mm and a width of 6 mm. A razor notch having a depth of 0.4 mm in the thickness direction is formed at the center of a tensile part thereof, and this test piece is used to measure a time period required for breakage.

This test method correlates with the notch pipe test as provided for in ISO 13479. Fig. 1 and Table 3 show a relationship between data on the notched Lander ESCR of each of various polyethylene samples and data on the notch pipe test thereof as provided for in ISO 13479.

Among the samples whose data are shown, A is a high-density polyethylene of Example 4 which will be given later and B to F are high-density polyethylenes produced by related-art. The high-load melt flow rates (HLMFRs) and densities of these samples are as follows.

Sample A: HLMFR = 12 g/10 min; density = 0.951 g/cm$^3$

Sample B: HLMFR = 11 g/10 min; density = 0.948 g/cm$^3$

Sample C: HLMFR = 26 g/10 min; density = 0.948 g/cm$^3$

Sample D: HLMFR = 13 g/10 min; density = 0.954 g/cm$^3$

Sample E: HLMFR = 10 g/10 min; density = 0.952 g/cm$^3$

Sample F: HLMFR = 9.9 g/10 min; density = 0.951 g/cm$^3$

As Fig. 1 shows, the both data considerably well correlate to each other. The breaking time (T) determined by this test method can be an index to long-term durability. The test method can be sufficiently used as a method of evaluating long-term durability.

The breaking time (T) measured by notched Lander ESCR according to the present invention may be 100 hours or longer and is preferably 200 hours or longer, more preferably 300 hours or longer. When a value of T is less than 100 hours, the value in the notch pipe test is less than about 1,200 hours and there is a fear that SCG may be insufficient. When a value of T is 100 hours or longer and less than about 1,200 hours, the resin can have properties required of pipe.

In general, a relationship between long-term durability (a breaking time (T) measured by notched Lander ESCR), a high-load melt flow rate (HLa), and an $\alpha$-olefin content (Ca) is as follows. When the HLa decreases (i.e., the molecular weight increases) or the Ca increases, then the value of T, which is an index to long-term durability, becomes large (is improved). Namely, by designing materials so that the value of the right-hand side of the above formula becomes large, long-term durability is increased. Consequently, to satisfy the above formula means that this resin can have both of excellent flowability and rigidity while retaining excellent long-term durability.

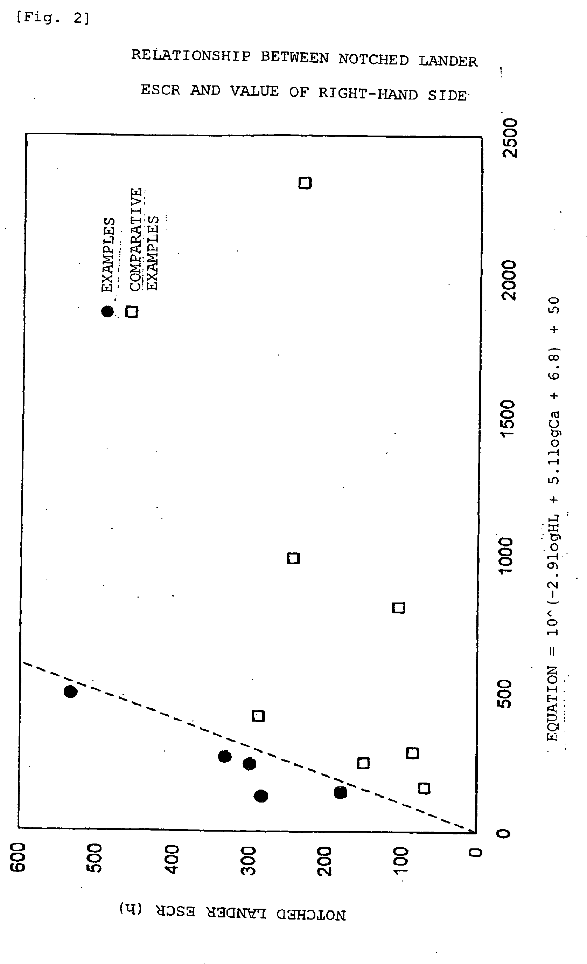

It is preferred that the relationship among the breaking time (T) measured by notched Lander ESCR, the high-load melt flow rate (HLa), and the $\alpha$-olefin content (Ca) according to the present invention should satisfy the following formula. With respect to the long-term durability, this formula clearly distinguishes a region unable to be attained with any known material from a region in which an excellent effect can be attained by the present invention. In this connection, the regions distinguished by the following formula and a graph obtained by plotting the data in Examples and Comparative Examples are shown in Fig. 2.

$$T \geq 10^{\wedge}(-2.9 \times \log HLa + 5.1 \times \log Ca + 6.8) + 50.$$

Methods for regulating the breaking time (T) measured by notched Lander ESCR and methods for satisfying the above formula will be described later.

2. Specification of Components of Polyethylene Resin (A)

(1) Specification of Components

The polyethylene resin (A) of the present invention is a polyethylene resin comprising the following two kinds of polyethylene polymers, i.e., a polyethylene polymer component (B) and a polyethylene polymer componet (C), produced by a multistage polymerization using a Ziegler catalyst.

(B) A polyethylene polymer having an HLMFR (HLb) of 0.01 to 3 g/10 min and a content of $\alpha$-olefin having 3 to 12 carbon atoms (Cb) of 3.0 mol% or lower, an amount ratio for polymerization (Xb) of the polymer (B) being 20 to 60% by weight.

(C) A polyethylene polymer having an MFR (MFRc) of 1 to 1,000 g/10 min and a content of $\alpha$-olefin having 3 to 12 carbon atoms (Cc) of 0.5 mol% or lower, an amount ratio for polymerization (Xc) of the polymer (C) being 40 to 80% by weight.

Examples of polymer in the polyethylene resin (A) of the present invention include an ethylene/propylene copolymer, an ethylene/1-butene copolymer, an ethylene/1-pentene copolymer, an ethylene/1-hexene copolymer, an ethylene/4-methyl-1-pentene copolymer, an ethylene/1-octene copolymer, and an ethylene/1-decene copolymer. Two or more of these may be used.

The density (Da) of this polyethylene resin (A) is in the range of 0.945 to 0.965 g/cm$^3$, preferably 0.947 to 0.960 g/cm$^3$, as stated above. With respect to molecular weight, a polyethylene resin having a number-average molecular weight of about 5,000 to 40,000 may be used.

The polyethylene resin (A) includes a polyethylene resin substantially constituted of at least two kinds of polyethylene components comprising a polyethylene component having a relatively high molecular weight (this is referred to also as "polyethylene polymer component (B)") and a polyethylene component differing from that and having a relatively low molecular weight (this is referred to also as "polyethylene polymer component (C)"). This polyethylene resin (A) comprising two or more kinds of polyethylene components can be prepared by conventional polymer blending of the polyethylene polymer component (B) prepared by polymerization beforehand with the polyethylene polymer component (C). This polymer composition comprising the polyethylene polymer component (B) and the polyethylene polymer component (C) can be further blended with other kinds of components, as a third component, such as general-purpose various polyethylenes, an ethylene/propylene copolymer, an ethylene/propylene/diene copolymer, a natural rubber, and a synthetic rubber, as long as they do not alter the properties of the polyethylene resin for a pipe

However, a practical process for producing the polyethylene resin (A) is a method employing a multistage polymerization step in reactors, in which the polyethylene polymer component (B) is prepared beforehand in a preceding step and the polyethylene polymer component (C) is prepared in the next step to thereby bring the two components into the state of being blended in an appropriate ratio in the final step. This ratio of the polyethylene polymer component (B) to the polyethylene polymer component (C) can be changed at will. However, in order that the polyethylene resin may be used in a specific application, i.e., as a pipe, and properly exhibit properties required of a pipe, there is a proper range of the ratio thereof as a matter of course. In view of the fact that the preparation thereof depends mainly on the polymerization step, there is a possibility that a polyethylene polymer component which belongs to neither the polyethylene polymer component (B) nor the polyethylene polymer component (C) might coexist in a slight amount depending on the preparation. However, the inclusion in such a slight ratio that it does not impair the properties required of a pipe does not lead to a problem.

(2) Component (B)

The polyethylene polymer (B) as component (B) in the present invention should have an HLMFR (HLb), as measured at a temperature of 190°C under a load of 211.82 kgm/s$^2$ (21.6 kgf), in the range of 0.01 to 3 g/10 min, preferably 0.02 to 1 g/10 min. The $\alpha$-olefin content (Cb) thereof is 3.0 mol% or lower, preferably in the range of 0.1 to 2.0 mol%. In case where the $\alpha$-olefin content thereof is higher than 3.0 mol%, there is a possibility that the polyethylene resin might have a decreased density and decreased rigidity.

In case where the HLb thereof is lower than 0.01, there is a possibility that flowabilitymight decrease and a dispersion failure might occur. In case where the HLb thereof exceeds 3, there is a possibility that the resin might be poor in long-term durability, such as SCG and notched Lander ESCR, and in sagging during pipe molding (sagging properties).

High-load melt flow rate is measured in accordance with JIS K-7210 (1996), Table 1, conditions 7 at a temperature of 190°C under a load of 211.82 N.

The high-load melt flow rate can be increased or decreased by changing the polymerization temperature or the amount of a chain-transfer agent.

$\alpha$-Olefin content is measured by $^{13}$C-NMR.

The $\alpha$-olefin content can be increased or decreased by increasing or decreasing the amount of the $\alpha$-olefin to be fed and copolymerized with ethylene.

Examples of the polyethylene polymer (B) in the present invention include an ethylene/propylene copolymer, an ethylene/1-butene copolymer, an ethylene/1-pentene copolymer, an ethylene/1-hexene copolymer, an ethylene/4-methyl-1-pentene copolymer, and an ethylene/1-octene copolymer each having an $\alpha$-olefin content (Cb) of 3.0 mol% or lower. Examples thereof further include binary and ternary copolymer obtained using two or more kinds of these.

The density (Db) of this polyethylene polymer (B) preferably is in the range of 0.910 to 0.940 g/cm$^3$, preferably 0.915 to 0.935 g/cm$^3$, as stated above. However, the density thereof varies depending on a composition ratio to the other component (C), and should not be limited to that density range. With respect to molecular weight, one having a number-average molecular weight of about 10,000 to 300,000 may be used. Preferably, one having a number-average molecular weight of about 50,000 to 200,000 is used.

(3) Component (C)

The polyethylene polymer (C) as component (C) in the present invention should have an MFR (MFRc), as measured at a temperature of 190°C under a load of 211.82 kgm/s$^2$ (2.16 kgf), in the range of 1 to 1,000 g/10 min, preferably 5 to 500 g/10 min. The $\alpha$-olefin content (Cb) thereof is 0.5 mol% or lower, preferably be 0.3 mol% or lower. In case where the $\alpha$-olefin content thereof is higher than 0.5 mol%, there is a possibility that the polyethylene resin might have a decreased density and decreased rigidity.

In case where the MFRc thereof is lower than 1, flowability might decrease. In case where the MFRc thereof exceeds 1,000, there is a possibility that the resin might be poor in long-term durability, such as SCG and notched Lander ESCR, and in impact strength. Melt flow rate (hereinafter referred to also as "MFR") is measured in accordance with JIS K-7210 (1996), Table 1, conditions 4 at a temperature of 190°C under a load of 21.18 N.

$\alpha$-Olefin content is measured by $^{13}$C-NMR. The $\alpha$-olefin content can be increased or decreased by increasing or decreasing the amount of the $\alpha$-olefin to be fed and copolymerized with ethylene.

Examples of the polyethylene polymer (C) in the present invention include an ethylene/propylene copolymer, an ethylene/1-butene copolymer, an ethylene/1-pentene copolymer, an ethylene/1-hexene copolymer, an ethylene/4-methyl-1-pentene copolymer, and an ethylene/1-octene copolymer each having an $\alpha$-olefin content (Cc) of 0.5 mol% or lower. Examples thereof further include binary and ternary copolymer obtained using two or more kinds of these.

The density (Dc) of this polyethylene polymer (C) preferably is in the range of 0.935 to 0.980 g/cm$^3$, preferably 0.935 to 0.960 g/cm$^3$, as stated above. However, the density thereof varies depending on a composition ratio to the component (C), and should not be limited to that density range. With respect to molecular weight, one having a number-average molecular weight of about 1,000 to 200,000 may be used. Preferably, one having a number-average molecular weight of about 2,000 to 10,000 is.used.

(4) Composition ratio

A composition ratio of the polyethylene polymer (B) as component (B) and the polyethylene polymer (C) as component (C) is such that component (B)/component (C) = 20 to 60% by weight/80 to 40% by weight, preferably component (B) /component (C) = 30 to 55% by weight/70 to 45% by weight.

In case where the composition ratio of component (B) is lower than 20% by weight and the composition ratio of component (C) exceeds 80% by weight, there is a possibility that SCG might decrease. In case where the composition ratio of component (B) exceeds 60% by weight and the composition ratio of component (C) is lower than 40% by weight, there is a possibility that flowability might decrease.

3. Kind of $\alpha$-Olefin in Polyethylene Resin

The kind of the $\alpha$-olefin constituting the polyethylene resin (A) in the present invention is not particularly limited as long as it is an $\alpha$-olefin copolymerizable with ethylene. However, one having 3 to 12 carbon atoms is preferred. Typical examples thereof include propylene, 1-butene, 1-pentene, 1-hexene, 4-methyl-1-pentene, and 1-octene. Two or more kinds of these may be used.

In a polyethylene resin obtained with a Ziegler catalyst, two or more kinds of short branches are observed not only in case of a copolymerization with two or more $\alpha$-olefins but also in case of a copolymerization with a single $\alpha$-olefin. This is attributable to by-products. For example, a methyl branch and an ethyl branch are included as propylene and 1-butene, respectively, in the $\alpha$-olefin content.

In the polyethylene resin of the present invention, the main $\alpha$-olefin desirably has 6 or more and 12 or less of carbon atoms so as to enable the resin to have excellent slow crack growth (SCG) property. The term main $\alpha$-olefin herein means an $\alpha$-olefin which gives short branches existing in a largest number; for example, 1-hexene in the case of a butyl branch and 1-butene in the case of an ethyl branch. As an $\alpha$-olefin having 6 or more carbon atoms, 1-hexene, 1-heptene, 1-octene, 1-decene, 4-methyl-1-pentene, and the like may be used.

The main $\alpha$-olefin in the polyethylene polymer (B) and in the polyethylene polymer (C) can be the same as the main $\alpha$-olefin in the polyethylene resin (A). The polyethylene polymer (B) and the polyethylene polymer (C) comprise a main $\alpha$-olefn having 6 or more and 12 or less carbon atoms, the main $\alpha$-olefin being the $\alpha$-olefin which gives short branches existing in a largest number.

4. Production of Polyethylene Resin

(1) Production Processes

The polyethylene resin (A) of the present invention is not particularly limited in production process, etc. as long as the resin satisfies the constituent requirements according to the present invention.

In order for a polymer alone, i.e., a polymer obtained by a single-stage polymerization, not included in the present claims, to satisfy the constituent requirements according to the present invention, it may satisfy a molecular structure such as that obtained by a multistage polymerization using a Ziegler catalyst. Specifically, the polymer which has a wide molecular-weight distribution and has a short branch that is obtained by $\alpha$-olefin copolymerization and selectively introduced on the high-molecular weight side may satisfy the requirements. Examples of such catalysts are given in JP-A-2003-105016.

In the multistage polymerization comprising two or more polymerization stages, a Ziegler catalyst is used. A Ziegler catalyst is used because a metallocene catalyst generally brings about a narrow composition distribution and, despite this, brings about a narrow molecular-weight distribution. It is desirable to employ a process in which the polyethylene polymer (B) as component (B), which has a high molecular weight, and the polyethylene polymer (C) as component (C), which has a low molecular weight, are successively produced by the multistage polymerization.

Other examples not included in the present claims include a Phillips catalyst for the single-stage polymerization. However, since use of this catalyst results in a molecular structure having a long branch, there is a possibility that no improvement of slow crack growth (SCG) property might be expected.

## (2) Ziegler Catalyst

A known Ziegler catalyst is used in the present invention. For example, the catalytic systems described in JP-A-53-78287, JP-A-54-21483, JP-A-55-71707, and JP-A-58-225105 are used.

Specific examples thereof include a catalytic system comprising: a solid catalyst component obtained by co-pulverizing a trihalogenated aluminum, an organosilicon compound having an Si-O bond, and a magnesium alcoholate and bringing a tetravalent titanium compound into contact with the resultant co-pulverization product; and an organoaluminum compound.

The solid catalyst component preferably is one containing titanium atoms in an amount of 1 to 15% by weight. The organosilicon compound preferably is one having a phenyl group or an aralkyl group, such as, e.g., diphenyldimethoxysilane, phenyltrimethoxysilane, phenyltriethoxysilane, triphenylethoxysilane, triphenylmethoxysilane, or the like.

In producing the co-pulverization product, the ratio of the trihalogenated aluminum and organosilicon compound to be used, per mol of the magnesium alcoholate, each are generally 0.02 to 1.0 mol, especially preferably 0.05 to 0.20 mol. Furthermore, the ratio of the aluminum atom of the trihalogenated aluminum to the silicon atom of the organosilicon compound is preferably from 0.5 to 2.0 in terms of molar ratio.

For producing the co-pulverization product, common methods may be applied, using a pulverizer in general use for producing this kind of solid catalyst component, such as a rotating ball mill, a vibrating ball mill, and a colloid mill. The co-pulverization product obtained may have an average particle diameter of usually 50 to 200 $\mu$m and a specific surface area of 20 to 200 m$^2$/g.

The co-pulverization product thus obtained is brought into contact with a tetravalent titanium compound in a liquid phase to thereby obtain the solid catalyst component.

The organoaluminum compound to be used in combination with the solid catalyst component preferably is a trialkylaluminum compound. Examples thereof include triethylaluminum, tri-n-propylaluminum, tri-n-butylaluminum, and tri-i-butylaluminum.

## (3) Polymerization

The polyethylene resin (A) of the present invention is produced by a multistage polymerization.

By thus successively producing the polyethylene polymer (B) as component (B), which has a high molecular weight, and the polyethylene polymer (C) as component (C), which has a low molecular weight, by the multistage polymerization using the above Ziegler catalyst, the polyethylene resin (A) of the present invention is produced.

The processes for producing the polyethylene resin (A) by the multistage polymerization is a process in which the above Ziegler catalyst and a polymerization apparatus comprising two or more serially connected reactors are used to produce component (B), which has a high molecular weight, in one or more preceding reactors, and component (C), which has a low molecular weight, in a later-stage reactor, by a suspension polymerization, or to produce component (C), which has a low molecular weight, and component (B), which has a high molecular weight, in this order by a continuous suspension polymerization. The former is called a regular multistage polymerization, while the latter is called a reverse multistage polymerization. However, the reverse multistage polymerization has drawbacks that an apparatus for purging away unreacted hydrogen after the production of the low-molecular weight component is necessary and that the mixture of the low-molecular weight component and the high-molecular weight component has poor homogeneity. Consequently, the former process, i.e., the regular multistage polymerization, is preferred.

Namely, it is a process for producing a polyethylene. resin (A) for a pipe according to (1), wherein producing a polyethylene polymer (B) having an HLMFR (HLb) of 0.01 to 3 g/10 min and a content of $\alpha$-olefins having 3 to 12 carbon atoms (Cb) of 3.0 mol% or lower, as a high-molecular weight component, in one or more preceding reactors in a polymerization apparatus comprising two or more serially connected reactors, using a Ziegler catalyst containing at least titanium and magnesium, wherein the polymer (B) is produced in an amount ratio for polymerization (Xb) of 20 to 60% by weight; subsequently transferring the reaction liquid containing the high-molecular weight component to a next reactor directly; and producing a polyethylene polymer (C) having an MFR (MFRc) of 1 to 1,000 g/10 min and a content of $\alpha$-olefins having 3 to 12 carbon atoms (Cc) of 0.5 mol% or lower as a low-molecular weight component by a continuous suspension polymerization, wherein the polymer (C) is produced in an amount ratio for polymerization (Xc) of 40 to 80% by weight.

The main $\alpha$-olefins of the polyethylene polymer (B) and polyethylene polymer (C) each have 6 or more and 12 or lower carbon atoms.

Polymerization conditions in each reaction vessel are not particularly limited as long as the target component can be produced. However, the polymerization is usually conducted at a polymerization temperature of 50 to 110°C for 20 minutes to 6 hours at a pressure of 0.2 to 10 MPa, although the pressure depends on the kind of the solvent to be used.

In a process in which a polymerization apparatus comprising two or three pipe loop reactors connected serially is used to produce component (B), which has a high molecular weight, in the preceding one or two reactors, and component (C), which has a low molecular weight, in the final reactor, by the continuous suspension polymerization, the polymerization reactions are conducted in the following manners. In the first-stage and the second-stage reactors, the copolymerization of ethylene and an $\alpha$-olefin is conducted while regulating the molecular weight by changing a weight ratio or a partial-pressure ratio of hydrogen concentration to ethylene concentration, or the polymerization temperature, orboth, and while regulating the density by changing the weight ratio or the partial-pressure ratio of $\alpha$-olefin concentration to ethylene concentration. In the case where the high-molecular weight component is produced in two reactors, substantially the same high-molecular weight component is produced in the first-stage and the second-stage reaction vessels.

In the final reaction vessel, the reaction mixture which has flowed thereinto from the first-stage or the second-stage reaction vessel for producing the high-molecular weight component contains ethylene and hydrogen and further contains the $\alpha$-olefin which also has flowed thereinto. Necessary ethylene and hydrogen are added thereto to produce.

The polymerization reaction mixture obtained through the polymerization in the first-stage reaction vessel is transferred to the second-stage reaction vessel through a connecting pipe by a pressure difference. When there are three reactors, the reaction mixture is further transferred to the third reaction vessel through a connecting pipe by a pressure difference.

For the polymerization, any arbitrary method can be applied, such as a slurry polymerization method in which a polymer particle produced by the polymerization is dispersed in the solvent, a solution polymerization method in which the polymer particle is dissolved in the solvent, or a vapor-phase polymerization method in which the polymer particle is dispersed in a vapor phase.

In the case of the slurry polymerization method and the solution polymerization method, one or a mixture of inert hydrocarbons such as propane, n-butane, isobutane, n-pentane, isopentane, hexane, heptane, octane, decane, cyclohexane, benzene, toluene, and xylene may be used as a hydrocarbon solvent. In the case of the slurry polymerization, it is preferred to use propane, n-butane, and isobutane as the solvent from the standpoint that is difficult to dissolve in the solvent even at elevated polymerization temperatures, to maintain a slurry state.

In the polymerization in which a solid Ziegler catalyst is used, hydrogen is generallyused as a so-called chain-transfer agent for molecular-weight regulation. Hydrogen pressure is not particularly limited. However, the hydrogen concentration in the liquid phase is generally $1.0 \times 10^{-5}$ to $1.0 \times 10^{-1}$% by weight, preferably $5.0 \times 10^{-4}$ to $5.0 \times 10^{-2}$% by weight.

(4) Blending Method

This blending method is a method in which a polymer blend comprising two or more polymer components differing in grade and prepared in reactors by a multistage polymerization operation is mixed in order to further homogenize the composition to thereby produce a polyethylene resin for a pipe which has evenness of quality. For example, it is a method in which a multistage polymerization operation is conducted to produce a polyethylene polymer component (B) having a relatively high molecular weight in the first step, and produce a polyethylene polymer comoponent (C) differing from the component (B) and having a relatively low molecular weight in the next step by polymerization and these components are further mixed to obtain a material having a more homogeneous composition. In case where this mixing of component (B) with component (C) results in an uneven part, there is a fear that the pipe to be molded from this mixture may have a part which is uneven in strength, etc.

This method has an advantage that a component regulation can be easily conducted in this blending stage. For example, a third component for enhancing the impact strength of the polyethylene resin, such as various additives, such as an ethylene copolymer, e.g., E-P-R or E-P-D-M, a synthetic resin, a synthetic rubber, a natural rubber, a filler, a stabilizer, a lubricant, etc. can be selected arbitrarily and blended with the resin in a given amount according to need. This blending method preferably is a method which attains a high degree of kneading. Examples thereof include blending methods employing a common corotating or counter-rotating twin-screw extruder, a single-screw extruder, a Banbury mixer, a continuous kneader of the intermeshing or non-intermeshing type, a Brabender, a kneader Brabender, or the like.

(5) Regulation of Notched Lander ESCR

In the polyethylene resin satisfying (a) to (d), methods for regulating requirements (a), (b), and (c) are general methods. However, examples of methods usable for producing or regulating a polyethylene resin specified by requirement (d) include the following.

First, a sufficiently wide molecular-weight distribution is preferred. This is a requirement necessary for the production of a polyethylene resin which has satisfactory flowability, i.e., a high HLMFR, and has excellent notched Lander ESCR despite the flowability. Although a molecular-weight distribution having two peaks is preferred, it is easily realized by conducting a multistage polymerization using a Ziegler catalyst to produce a high-molecular weight component and a low-molecular weight component which differ sufficiently from each other in molecular weight.

The molecular-weight distribution may be 10 to 50, preferably 15 to 40, in terms of the ratio (Mw/Mn) of a weight-average molecular weight (Mw) to a number-average molecular weight (Mn) as determined by a gel permeation chromatography (GPC). In case where the molecular-weight distribution is below 10, the resin is poor in extrudability in molding and durability such as slow crack growth (SCG) property. On the other hand, the molecular-weight distribution exceeding 50 are undesirable because mechanical strength such as impact resistance decreases.

The molecular-weight distribution can be regulated by changing factors in the polymerization of ethylene with an $\alpha$-olefin. For example, it can be regulated by changing the kind of a catalyst, the kind of a co-catalyst., a polymerization temperature, an amount of a chain-transfer agent, a residence time in a polymerization reaction vessel, the number of polymerization reaction vessels, etc. Preferably, the value of molecular-weight distribution can be increased or decreased by regulating the molecular weight of each of the high-molecular weight component and the low-molecular weight component and the mixed ratio of these.

An explanation is then given on $\alpha$-olefins. As apparent from requirement (d), it is preferred that sufficient notched Lander ESCR is attained while maintaining a low $\alpha$-olefin content, i.e., rigidity. As to how to achieve such properties, it was presumed from investigations made by the present inventors that there are two factors.

The first is that an $\alpha$-olefin is introduced in a larger amount on the high-molecular weight side. The polyethylene resin comprising the polyethylene polymer component (B), which has a high molecular weight, and the polyethylene polymer component (C), which has a low molecular weight, satisfies: ($\alpha$-olefin content in the low-molecular polyethylene polymer component (C))/($\alpha$-olefin content in the high-molecular polyethylene polymer component (B)) $\leq 0.20$. The $\alpha$-olefin content herein includes a content of by-product short branch. Production of a resin satisfying that relationship by a regular multistage polymerization using a Ziegler catalyst may be accomplished, for example, by heightening the copolymerizability of the $\alpha$-olefin during the production of the high-molecular weight component to thereby reduce the amount of the unreacted $\alpha$-olefin which flows into the reaction vessel in which the low-molecular weight component is produced. Specifically, this can be regulated, for example, by using a Ziegler catalyst having an excellent copolymerizability of $\alpha$-olefin, elevating the polymerization temperature during the production of the high-molecular weight component, and using two or more reaction vessels for producing the high-molecular weight component.

The second is that the $\alpha$-olefin copolymerized has a narrow composition distribution. Although there are various methods for evaluating composition distribution, it was presumed that it is preferred to satisfy the value obtained by dividing a ratio of chains where two $\alpha$-olefins are successive to chains where an $\alpha$-olefin is isolated, as determined by, e.g., $^{13}$C-NMR, by the $\alpha$-olefin content (that value = $T\beta\delta/T\delta\delta/Ca$; described later) is 0.15 or smaller. In calculating the $T\beta\delta/T\delta\delta/Ca$, only the main $\alpha$-olefin, which is contained in a largest amount, is taken into account. Examples of measures which are thought to be effective in making that value be 0.15 or smaller include to use a Ziegler catalyst which brings about a narrow $\alpha$-olefin composition distribution and to employ polymerization conditions which bring about a narrow composition distribution especially in the production of the high-molecular weight component (e.g., to elevate the polymerization temperature).

Besides polymerization conditions, the selection of a Ziegler catalyst is important for controlling the $\alpha$-olefin copolymerizability and the composition distribution. Preferred examples among the Ziegler catalysts enumerated above include that shown in JP-A-58-225105.

(6) Additives and Compounding Agents

Additives in general use, such as an antioxidant, a heat stabilizer, a light stabilizer, an antifogging agent, a flame retardant, a plasticizer, an antistatic agent, a release agent, a blowing agent, a nucleating agent, an inorganic/organic filler, a reinforcement, a colorant, a pigment, and a perfume, and other thermoplastic resin may be used to add to the polyethylene resin of the present invention, as long as this does not depart from the spirit of the present invention.

5. Others

(1) Molding Methods

The polyethylene resin (A) of the present invention may be molded into a desired shape by using a molding method in general use in the field of synthetic resins, such as film molding, blow molding, injection molding, extrusion molding, and compression molding. In particular, a satisfactory molded pipe can be obtained by molding the resin by the pipe molding method.

(2) Applications

The polyethylene resin (A) of the present invention has highly excellent durability for its flowability (HLMFR) and $\alpha$-olefin content (influencing density; index to rigidity). The resin can hence be used as a pipe and a joint which not only satisfy PE100 in the field of pipe, in particular, a water distribution pipe, but have highly excellent slow crack growth (SCG) property and are excellent in flowability, moldability, rigidity, and homogeneity.

EXAMPLES

The present invention will be explained below by reference to Examples. Each Example and Comparative Example is intended also to demonstrate the significance and the rationality of the constitutions in the present invention.
The methods used for the analysis and the property evaluation of the polyethylene resin (A) of the present invention and of component (B) and component (C) are shown below.

[HLMFR]

Measured values obtained in accordance with JIS K-7210 (1996), Table 1, conditions 7 at a temperature of 190°C under a load of 211.82 N are shown as HLMFR.

[MFR]

Measured values obtained in accordance with JIS K-7210 (1996), Table 1, conditions 4 at a temperature of 190°C under a load of 21.18 N are shown as MFR.

[Density]

Measurement was conducted in accordance with JIS K-7112 (1996).

[$\alpha$-Olefin Content]

Measurement by $^{13}$C-NMR was conducted under the following conditions.
Apparatus: JNM-GSX400, manufactured by JEOL Ltd.
Pulse duration: 8.0 $\mu$sec (flip angle = 40°)
Pulse repetition time: 5 sec
Number of integrations: 5,000 or more
Solvent and internal reference:

o-dichlorobenzene/benzene-$d_6$/hexamethyldisiloxane (mixed ratio: 30/10/1)

Measurement temperature: 120°C
Sample concentration: 0.3 g/mL
The spectrum obtained by the measurement was analyzed for observed-peak assignment in accordance with (1) Macromolecules, 15, 353-360 (1982) (Eric T. Hsieh and James C. Randall) for an ethylene/1-butene copolymer and with (2) Macromolecules, 15, 1402-1406 (1982) (Eric T. Hsieh and James C. Randall) for an ethylene/1-hexene copolymer. The $\alpha$-olefin content was then determined. With respect to other short branches, e.g., a methyl branch, a peak observed was assigned in accordance with J. Polym. Sci. Part A: Polym. Chem., 29, 1987-1990 (1991) (Atsushi Kaji, Yoshiko Akimoto, and Masao Murano), and the number of the short branches was then determined. Incidentally, there is the following relationship between the number of short branches (per 1,000 main-chain carbon atoms) and the $\alpha$-olefin content (mol%): $\alpha$-olefin content = (number of short branches)/5.

With respect to chains where two $\alpha$-olefins are successive and chains where an $\alpha$-olefin is isolated, the amounts thereof were determined from the peaks at 37.2 ppm (two successive $\alpha$-olefins) and 39.7 ppm (an isolated $\alpha$-olefin) in the ethylene/1-butene copolymer and from the peaks at 36.0 ppm (two successive $\alpha$-olefins) and 38.1 ppm (an isolated $\alpha$-olefin) in the ethylene/1-hexene copolymer. The chains where two $\alpha$-olefins are successive and the chains where an $\alpha$-olefin isolated are expressed by $T\beta\delta$ and $T\delta\delta$, respectively, and the $T\beta\delta/T\delta\delta/Ca$, which is calculated using the $\alpha$-olefin content Ca (mol%), was used as an index to $\alpha$-olefin composition distribution. Namely, the smaller the value thereof is, the larger the amount of the isolated chains is and the narrower the composition distribution is.

[Flexural Modulus]

Measurement was conducted in accordance with JIS K 7171 at a test speed of 2 mm/min.

[Notched Lander Method ESCR]

Measurement was conducted with a constant-stress environmental stress cracking tester as provided for in JIS K 6922-2: 1997, appendix, using a 1 wt% aqueous solution of a sodium higher alcoholsulfonate as a test liquid under the conditions of a test temperature of 80°C and an initial tensile stress of 60 kg/cm$^2$. As a test piece was used a pressed sheet having a thickness of 1 mm and a width of 6 mm. A razor notch having a depth of 0.4 mm in the thickness direction was formed at the center of a tensile part thereof, and this test piece was used to measure the time period required for breakage.

[Pipe Molding]

For Notch Pipe Test and Rapid Crack Propagation Test (RCP) Evaluation: Single-screw extruder Type UH-70-32DN (70 mm$\Phi$; L/D=32), manufactured by Hitachi Zosen Trading & Mfg. Co., Ltd., was used to mold a pipe having an outer diameter of 110 mm and a wall thickness of 10 mm as provided for in ISO 4427 at a die temperature of 190°C.
For MRS Evaluation: Single-screw extruder Type KME1-45-33B (45 mm$\phi$; L/D=45), manufactured by Krauss-Maffei GmbH, was used to mold a pipe having an outer diameter of 32 mm and a wall thickness of 3 mm as provided for in ISO 4427 at a die temperature of 190°C.

[Notch Pipe Test]

The pipe having an outer diameter of 110 mm and a wall thickness of 10 mm as provided for in ISO 4427 was notched to form four notches each extending in the pipe axis direction over a length of 110 mm and having a point angle of 60° in accordance with ISO 13479. These notches were formed at the same intervals along the periphery so as to result in a residual wall thickness of 10 mm. This pipe was subjected to an internal pressure creep test under the conditions of a test temperature of 80°C and an internal pressure of 4.6 bar.

[MRS (Minimum Required Strength) Evaluation]

The pipe having an outer diameter of 32 mm and a wall thickness of 3 mm as provided for in ISO 4427 was evaluated in accordance with ISO 9080 and ISO 12162.

[RCP (Rapid Crack Propagation Test)]

The pipe having an outer diameter of 110 mm and a wall thickness of 10 mm as provided for in ISO 4427 was subjected to the RCP S4 test in accordance with ISO 13477 at a test temperature of 0°C to determine the critical pressure $(Pc,_{S4})$.

[EXAMPLE 1]

(Preparation of Solid Catalyst Component)

In a nitrogen atmosphere, 20 g of commercial magnesium ethylate (average particle diameter, 860 $\mu$m), 1.66 g of granular aluminum trichloride, and 2.72 g of diphenyldiethoxysilane were introduced into a pot having an inner volume of 1 L (vessel for pulverization) containing about 700 magnetic balls having a diameter of 10 mm. These components were co-pulverized with a vibrating ball mill for 3 hours under the conditions of an amplitude of 6 mm and a frequency of 30 Hz. After the co-pulverization, the content was separated from the magnetic balls in the nitrogen atmosphere.

Into a 200-mL three-necked flask were introduced 5 g of the co-pulverization product thus obtained and 20 mL of n-heptane. At a room temperature, 10.4 mL of titanium tetrachloride were dropped with stirring. The contents were heated to 90°C and continuously stirred for 90 minutes. Subsequently, the reaction system was cooled. Thereafter, the supernatant was taken out and n-hexane was added. This operation was repeatedly conducted three times. The light-yellow solid obtained was dried at 50°C under reduced pressure for 6 hours to obtain a solid catalyst component.

(Production of Polyethylene Resin)

The following components were continuously supplied at the respective rates to a first reaction vessel which was a polymerizable-liquid-filled loop type reactor (slurry loop reactor) having an inner volume of 200 L: dehydrated and purified isobutane at 102 L/hr, triisobutylaluminum at 54 g/hr, the solid catalyst at 3.7 g/hr, ethylene at 14 kg/hr, hydrogen at 0.32 g/hr, and 1-hexene as a comonomer at 0.97 kg/hr. The ethylene was copolymerized with the 1-hexene under the conditions of 90°C, a polymerization pressure of 4.2 MPa, and an average residence time of 0. 9 hr. A part of the polymerization reaction product was sampled and measured for properties. As a result, this reaction product was found to have an HLMFR of 0.19 g/10 min, a density of 0.927 g/cm$^3$, and an $\alpha$-olefin content of 0.87 mol%.

Subsequently, the whole isobutane slurry containing the first-step polymerization product was introduced as it was into a second-step reaction vessel having an inner volume of 400 L. Isobutane, ethylene, and hydrogen were continuously supplied thereto at rates of 87 L/hr, 18 kg/hr, and 45 g/hr, respectively, to conduct second-step polymerization, without adding a catalyst and 1-hexene, under the conditions of 85°C, a polymerization pressure of 4.1 MPa, and an average residence time of 1.6 hr. The polyethylene polymer discharged from the second-step reaction vessel had an HLMFR of 13 g/10 min, a density of 0.949 g/cm$^3$, and an $\alpha$-olefin content of 0.48 mol% after drying. The ratio of the high-molecular weight component (the polymer produced in the first step) was 45% by weight.

On the other hand, the MFR of the polyethylene polymer produced as a low-molecular weight component in the second step was determined by separately conducting polymerization under the polymerization conditions used in the second step. As a result, the MFR thereof was 70 g/10 min. Furthermore, the $\alpha$-olefin content of the polyethylene polymer produced as a low-molecular weight component in the second step was determined based on the fact that additive property holds between the $\alpha$-olefin content in % by weight after the second step and the $\alpha$-olefin content in % by weight after the first step.

The polymerization conditions are summarized in Table 1 and the results of the polyethylene polymer after each step are summarized in Table 2.

[Table 1]

| Polymerization Conditions | | | | | | | | | | | |
|---|---|---|---|---|---|---|---|---|---|---|---|
| Item | Unit | Example | | | | | | Example | | | |
| | | 1 | 2 | 3 | 4 | 5 | 6 | 1 | 2 | 3 | |
| First Stage | | | | | | | | | | | |
| Polymerization solvent amount | L/hr | 102 | 101 | 63 | 64 | 103 | 102 | 102 | 65 | 105 | |
| Ethylene amount | kg/hr | 14 | 13 | 7 | 7 | 14 | 11 | 14 | 9 | 15 | |
| Comonomer amount | kg/hr | 0.97 | 0.77 | 0.73 | 0.66 | 0.67 | 1.43 | 1.38 | 0.97 | 0.70 | |
| Comonomer kind | - | 1-hexene | 1-hexene | 1-hexene | 1-hexene | 1-hexene | 1-hexene | 1-hexene | 1-hexene | 1-butene | |
| Hydrogen amount | g/hr | 0.32 | 0.26 | 0.15 | 0.12 | 0.31 | 0.25 | 0.59 | 0.27 | 0.30 | |
| Solid catalyst amount | g/hr | 3.7 | 2.8 | 3.6 | 3.5 | 3.6 | 3.1 | 3.2 | 3.8 | 3.5 | |
| Co-catalyst (TiBAL) amount | g/hr | 54 | 54 | 20 | 19 | 53 | 51 | 54 | 55 | 52 | |
| Polymerization temperature | °C | 90 | 90 | 85 | 90 | 90 | 85 | 80 | 75 | 90 | |
| Polymerization pressure | MPa | 4.2 | 4.2 | 4.3 | 4.3 | 4.2 | 4.2 | 4.2 | 4.3 | 4.2 | |
| Polymerization time | hr | 0.9 | 0.9 | 0.9 | 0.9 | 0.9 | 0.9 | 0.9 | 0.9 | 0.9 | |
| Second Stage | | | | | | | | | | | |
| Polymerization solvent amount | L/hr | 87 | 88 | 40 | 42 | 86 | 88 | 66 | 39 | 85 | |
| Ethylene amount | kg/hr | 18 | 20 | 1 | 7 | 19 | 23 | 18 | 9 | 18 | |
| Comonomer amount | kg/hr | - | - | 0.61 | 0.56 | - | - | - | 0.73 | - | |
| Comonomer kind | - | - | - | 1-hexene | 1-hexene | - | - | - | 1-hexene | - | |
| Hydrogen amount | g/hr | 45 | 51 | 0.07 | 0.07 | 47 | 57 | 36 | 0.11 | 43 | |
| Co-catalyst (TISAL) amount | g/hr | 0 | 0 | 0 | 0 | 0 | 0 | 0 | 0 | 0 | |
| Polymerization temperature | °C | 85 | 80 | 85 | 90 | 80 | 80 | 90 | 75 | 85 | |
| Polymerization pressure | MPa | 4.1 | 4.1 | 4.2 | 4.2 | 4.1 | 4.1 | 4.1 | 4.2 | 4.1 | |
| Polymerization time | hr | 1.6 | 1.7 | 0.9 | 0.9 | 1.6 | 1.7 | 1.6 | 0.5 | 0.6 | |

EP 1 884 527 B1

| Polymerization Conditions | | | | | | | | | | |
|---|---|---|---|---|---|---|---|---|---|---|
| Item | Unit | Example | | | | | | Example | | |
| | | 1 | 2 | 3 | 4 | 5 | 6 | 1 | 2 | 3 |
| Third Stage | | | | | | | | | | |
| Polymerization solvent amount | L/hr | | | 87 | 87 | | | | 89 | |
| Ethylene amount | kg/hr | | | 18 | 18 | | | | 16 | |
| Comonomer amount | kg/hr | | | - | - | | | | - | |
| Comonomer kind | - | | | - | - | | | | - | |
| Hydrogen amount | g/hr | | | 40 | 38 | | | | 39 | |
| Co-catalyst (TiBAL) amount | g/hr | | | 30 | 32 | | | | 31 | |
| Polymerisation temperature | °C | | | 90 | 90 | | | | 90 | |
| Polymerization pressure | MPa | | | 4.1 | 4.1 | | | | 4.1 | |
| Polymerization time | hr | | | 1.5 | 1.5 | | | | 1.6 | |

EP 1 884 527 B1

To the powder obtained after the second step were added 0.05% by weight phenolic antioxidant (trade name, Irganox 1010; manufactured by Ciba-Geigy Ltd.), 0.15% by weight phosphorus compound antioxidant (trade name, Irgafos 168; manufactured by Ciba-Geigy Ltd.), and 0.15% by weight calcium stearate. The mixture was kneaded with a 50 mm single-screw extruder under the conditions of 200°C and 90 rpm. After the kneading, the resin had an HLMFR of 9.9 g/10 min and a density of 0.949 g/cm$^3$.

The polyethylene resin thus obtained was evaluated for notched Lander ESCR. As a result, the ESCR thereof was found to be 300 hours (Table 2).

[Table 2]

Results of Polyethylene Resin Examination

| Item | Unit | Ex. 1 | Ex. 2 | Ex. 3 | Ex. 4 | Ex. 5 | Ex. 6 | Comp. Ex. 1 | Comp. Ex. 2 | Comp. Ex. 3 | Comp. Ex. 4 | Comp. Ex. 5 | Comp. Ex. 6 | Comp. Ex. 7 |
|---|---|---|---|---|---|---|---|---|---|---|---|---|---|---|
| (After 1st step) HLMFR | g/10min | 0.19 | 0.16 | 0.16 | 0.22 | 0.15 | 0.1 | 0.16 | 0.20 | 0.17 | | | | |
| Density | g/cm$^3$ | 0.927 | 0.927 | 0.923 | 0.926 | 0.933 | 0.920 | 0.929 | 0.927 | 0.926 | | | | |
| $\alpha$-Olefin content | mol% | 0.87 | 0.88 | 1.03 | 0.98 | 0.48 | 1.52 | 0.65 | 0.81 | 1.00 | | | | |
| Composition ratio | wt% | 45 | 40 | 23 | 23.1 | 45 | 35 | 45 | 23 | 45 | | | | |
| (After 2nd step) HLMFR | g/10min | 13 | 14 | 0.14 | 0.20 | 15 | 19 | 12 | 0.21 | 15 | | | | |
| Density | g/cm$^3$ | 0.949 | 0.950 | 0.923 | 0.926 | 0.954 | 0.947 | 0.949 | 0.928 | 0.950 | | | | |
| $\alpha$-Olefin content | mol% | 0.48 | 0.42 | 1.00 | 0.90 | 0.26 | 0.62 | 0.40 | 0.79 | 0.50 | | | | |
| Composition ratio | wt% | 55 | 60 | 23 | 22.9 | 55 | 65 | 55 | 23 | 55 | | | | |
| (After 3rd step) HLMFR | g/10min | | | 15 | 16 | | | | 16 | | | | | |
| Density | g/cm$^3$ | | | 0.948 | 0.951 | | | | 0.948 | | | | | |
| $\alpha$-Olefin content | mol% | | | 0.55 | 0.45 | | | | 0.51 | | | | | |
| Composition ratio | wt% | | | 54 | 54 | | | | 54 | | | | | |
| (Of low-molecular component) MFR | g/10min | 70 | 90 | 120 | 100 | 70 | 100 | 80 | 110 | 75 | | | | |
| $\alpha$-Olefin content | mol% | 0.16 | 0.11 | 0.15 | 0.11 | 0.09 | 0.15 | 0.26 | 0.27 | 0.07 | | | | |
| Main $\alpha$-olefin | | 1-hexene | 1-hexene | 1-hexene | 1-hexene | 1-hexene | 1-hexene | 1-hexene | 1-hexene | 1-butene | 1-butene | 1-butene | 1-butene | 1-hexene |
| T$\beta\delta$/T$\delta\delta$/Ca | | 0.11 | 0.12 | 0.09 | 0.11 | 0.11 | 0.12 | 0.14 | 0.15 | 0.05 | 0.04 | 0.04 | 0.07 | 0.16 |
| $\alpha$-Olefin amount (LMW) /$\alpha$-olefin amount (HMW) | | 0.18 | 0.13 | 0.16 | 0.12 | 0.18 | 0.10 | 0.40 | 0.35 | 0.07 | | | | |
| (Polyethylene resin) HLMFR | g/10min | 9.9 | 10 | 9.4 | 12 | 8.7 | 15 | 9.0 | 11 | 10 | 12 | 9.7 | 6.4 | 11 |
| Density | g/cm$^3$ | 0.949 | 0.950 | 0.948 | 0.951 | 0.955 | 0.947 | 0.949 | 0.948 | 0.950 | containing pigment | containing pigment | containing pigment | containing pigment |

EP 1 884 527 B1

19

| Results of Polyethylene Resin Examination | | | | | | | | | | | | | |
|---|---|---|---|---|---|---|---|---|---|---|---|---|---|
| Item | Unit | Ex. 1 | Ex. 2 | Ex. 3 | Ex. 4 | Ex. 5 | Ex. 6 | Comp. Ex. 1 | Comp. Ex. 2 | Comp. Ex. 3 | Comp. Ex. 4 | Comp. Ex. 5 | Comp. Ex. 6 | Comp. Ex. 7 |
| $\alpha$-olefin content | mol% | 0.48 | 0.42 | 0.55 | 0.45 | 0.26 | 0.62 | 0.40 | 0.51 | 0.50 | 0.69 | 0.65 | 0.61 | 6.56 |
| Flexural modulus | MPa | 1050 | 1070 | 1000 | 1080 | 1230 | 970 | 1030 | 990 | 1070 | 1010 | 1020 | 1030 | 950 |
| Notched Lander ESCR | hrs | 300 | 180 | 533 | 285 | 35 | 332 | 70 | 150 | 86 | 106 | 244 | 233 | 289 |
| logESCR Expression= | | 2.5 | 2.3 | 2.7 | 2.5 | 1.5 | 2.5 | 1.8 | 2.2 | 1.9 | 2.0 | 2.4 | 2.4 | 2.5 |
| -2.9logHL+5.1logCa +6.8 Expression= | | 2.3 | 2.0 | 2.6 | 1.9 | 1.1 | 2.3 | 2.0 | 2.3 | 2.4 | 2.9 | 3.0 | 3.4 | 2.6 |
| 10^(-2.9logHL +5.1logCa+6.8)+50 | | 240 | 139 | 491 | 126 | 62 | 264 | 157 | 244 | 282 | 809 | 987 | 2335 | 412 |
| MRS | MPa | | | 10 (PE-100) | 10 (PE-100) | | | | | | 10 (PE-100) | 10 (PE-100) | 10 (PE-100) | 10 (PE-100) |
| Notch pipe test | hrs | | | >17000 | 4200 | 450 | | | 900 | | | | | |
| Pc,S4 | bar | | | >25 | | | | | | | | | | |

EP 1 884 527 B1

[EXAMPLE 2]

A polyethylene polymer was obtained in Example 1 in which the polymerization conditions in the first step and the second step were changed as shown in Table 1. The results of the polymer obtained after each step are shown in Table 2. Thereafter, the same additives as in Example 1 were added and the mixture was kneaded with a single-screw extruder in the same manner. After the kneading, the resin had an HLMFR of 10 g/10 min and a density of 0.950 g/cm$^3$.
The polyethylene resin thus obtained was evaluated for notched Lander ESCR. As a result, the ESCR thereof was found to be 180 hours (Table 2).

[EXAMPLE 3]

The following components were continuously supplied at the respective rates to a first reaction vessel which was a polymerizable-liquid-filled loop type reactor (slurry loop reactor) having an inner volume of 100 L: dehydrated and purified isobutane at 63 L/hr, triisobutylaluminum at 20 g/hr, the solid catalyst of Example 1 at 3.6 g/hr, ethylene at 7 kg/hr, hydrogen at 0.15 g/hr, and 1-hexene as a comonomer at 0.73 kg/hr. The ethylene was copolymerized with the 1-hexene under the conditions of 85°C, a polymerization pressure of 4.3 MPa, and an average residence time of 0.9 hr. A part of the polymerization reaction product was sampled and measured for properties. As a result, this reaction product was found to have an HLMFR of 0.16 g/10 min, a density of 0.923 g/cm$^3$, and an $\alpha$-olefin content of 1.03 mol%.
Subsequently, the whole isobutane slurry containing the first-step polymerization product was introduced as it was into a second-step reaction vessel having an inner volume of 200 L. Isobutane, ethylene, hydrogen, and 1-hexene were continuously supplied thereto at rates of 40 L/hr, 7 kg/hr, 0.07 g/hr, and 0.16 kg/hr, respectively, to conduct second-step polymerization, without adding a catalyst, under the conditions of 85°C, a polymerization pressure of 4.2 MPa, and an average residence time of 0.9 hr. In this second step, the amount of hydrogen (control of an HLMFR) and 1-hexene (control of a density and an $\alpha$-olefin amount) were supplied so as to produce substantially the same polymer as in the first step. The polymerization reactionproduct after the second step was sampled and measured for properties. As a result, this reaction product was found to have an HLMFR of 0.14 g/10 min, a density of 0.923 g/cm$^3$, and an $\alpha$-olefin content of 1.00 mol%.
Subsequently, the whole isobutane slurry containing the second-step polymerization product was introduced as it was into a 400-L third-step reaction vessel. Isobutane, ethylene, and hydrogen were continuously supplied thereto at rates of 87 L/hr, 18 kg/hr, and 40 g/hr, respectively, to conduct third-step polymerization, without adding a catalyst and 1-hexene, under the conditions of 90 °C, apolymerizationpressure of 4.1 MPa, and an average residence time of 1.5 hr. The polyethylene polymer discharged from the third-step reaction vessel had an HLMFR of 15 g/10 min, a density of 0.948 g/cm$^3$, and an $\alpha$-olefin content of 0.55 mol% after drying. The ratios of the polymer (high-molecular weight component) produced in the first step and the second step each were 23% by weight.
On the other hand, the MFR of the polyethylene polymer produced as a low-molecular weight component in the third step was determined by separately polymerizing under the polymerization conditions used in the third step. As a result, the MFR thereof was 120 g/10 min. Furthermore, the $\alpha$-olefin content of the polyethylene polymer produced as a low-molecular weight component in the third step was determined based on the fact that additive property holds between the $\alpha$-olefin content in % by weight after the third step and the $\alpha$-olefin content in % by weight after the second step. As a result, the $\alpha$-olefin content thereof was 0.15 mol%.
The same additives as in Example 1 were added to the powder obtained after the third step and the mixture was kneaded in the same manner. After the kneading, the resin had an HLMFR of 9.4 g/10 min and a density of 0.948 g/cm$^3$.
The polyethylene resin thus obtained was evaluated for notched Lander ESCR. As a result, the ESCR thereof was found to be 533 hours (Table 2).

[EXAMPLE 4]

A Polyethylene polymer was obtained in Example 3 in which the polymerization conditions in the first step, the second step, and the third step were changed as shown in Table 1. The results of the polymer obtained after each step are shown in Table 2. Thereafter, the same additives as in Example 1 were added and the mixture was kneaded with a single-screw extruder in the same manner. After the kneading, the resin had an HLMFR of 12 g/10 min and a density of 0.951 g/cm$^3$.
The polyethylene resin thus obtained was evaluated for notched Lander ESCR. As a result, the ESCR thereof was found to be 285 hours (Table 2).

[EXAMPLE 5]

A polyethylene polymer was obtained in Example 1 in which the polymerization conditions in the first step and the second step were changed as shown in Table 1. The results of the polymer obtained after each step are shown in Table 2. Thereafter, the same additives as in Example 1 were added and the mixture was kneaded with a single-screw extruder in the same manner. After the kneading, the resin had an HLMFR of 8.7 g/10 min and a density of 0.955 g/cm$^3$.
The polyethylene resin thus obtained was evaluated for notched Lander ESCR. As a result, the ESCR thereof was found to be 35 hours (Table 2).

[EXAMPLE 6]

A polyethylene polymer was obtained in Example 1 in which the polymerization conditions in the first step and the second step were changed as shown in Table 1. The results of the polymer obtained after each step are shown in Table 2. Thereafter, the same additives as in Example 1 were added and the mixture was kneaded with a single-screw extruder in the same manner. After the kneading, the resin had an HLMFR of 15 g/10 min and a density of 0.947 g/cm$^3$.
The polyethylene resin thus obtained was evaluated for notched Lander ESCR. As a result, the ESCR thereof was found to be 332 hours (Table 2).

[COMPARATIVE EXAMPLE 1]

A polyethylene polymer was obtained in Example 1 in which the polymerization conditions in the first step and the second step were changed as shown in Table 1. A difference in polymerization conditions from Example 1 is that the polymerization temperature in the first step is as low as 80°C, while the temperature in the second step is as high as 90°C. The results of the polymer obtained after each step are shown in Table 2. Thereafter, the same additives as in Example 1 were added and the mixture was kneaded with a single-screw extruder in the same manner. After the kneading, the resin had an HLMFR of 9.0 g/10 min and a density of 0.949 g/cm$^3$.
The polyethylene resin thus obtained was evaluated for notched Lander ESCR. As a result, the ESCR thereof was found to be 70 hours (Table 2), which was considerably shorter than in Example 1.

[COMPARATIVE EXAMPLE 2]

A polyethylene polymer was obtained in Example 3 in which the polymerization conditions in the first step, the second step, and the third step were changed as shown in Table 1. A difference in polymerization conditions from Example 3 is that the polymerization temperature in the first step and the second step for producing a high molecular weight is 75°C, which is lower by 10°C than the temperature of 85°C in Example 3. The results of the polymer obtained after each step are shown in Table 2. Thereafter, the same additives as in Example 1 were added and the mixture was kneaded with a single-screw extruder in the same manner. After the kneading, the resin had an HLMFR of 11 g/10 min and a density of 0.950 g/cm$^3$.
The polyethylene resin thus obtained was evaluated for notched Lander ESCR. As a result, the ESCR thereof was found to be 150 hours (Table 2), which was as short as below 1/3 the value in the corresponding Example 3.

[COMPARATIVE EXAMPLE 3]

A polyethylene polymer was obtained in Example 1 in which the polymerization conditions in the first step and the second step were changed as shown in Table 1. A difference in polymerization conditions from Example 1 is that the α-olefin supplied for polymerization is not 1-hexene but 1-butene. The results of the polymer obtained after each step are shown in Table 2. Thereafter, the same additives as in Example 1 were added and the mixture was kneaded with a single-screw extruder in the same manner. After the kneading, the resin had an HLMFR of 10 g/10 min and a density of 0.949 g/cm$^3$.
The polyethylene resin thus obtained was evaluated for notched Lander ESCR. As a result, the ESCR thereof was found to be 86 hours (Table 2), which was considerably shorter than in Example 1.

[COMPARATIVE EXAMPLE 4]

TUB124 N1836, manufactured by BP-Solvay was evaluated. The results are summarized in Table 2. Because the main α-olefin was 1-butene, this polyethylene resin had a notched Lander ESCR of 106 hours, which deteriorated despite its high α-olefin content of 0.59 mol%.

[COMPARATIVE EXAMPLE 5]

TUB124 N2025, manufactured by BP-Solvay was evaluated. The results are summarized in Table 2. Because the main $\alpha$-olefin was 1-butene, this polyethylene resin had a notched Lander ESCR of 244 hours despite its high $\alpha$-olefin content of 0.65 mol%. This was poorer than in Examples 1 and 3, in which the $\alpha$-olefin contents were low.

[COMPARATIVE EXAMPLE 6]

CRP100, manufactured by Basell was evaluated. The results are summarized in Table 2. Because the main $\alpha$-olefin was 1-butene, this polyethylene resin had a notched Lander ESCR of 233 hours despite its high $\alpha$-olefin content of 0.61 mol% and high HLMFR of 6.4 g/10 min, which means high-molecular weight. This was poorer than in Examples 1, 3, and 4, in which the $\alpha$-olefin contents were low and the HLMFRs were high.

[COMPARATIVE EXAMPLE 7]

XS10H, manufactured by Fina was evaluated. The results are summarized in Table 2. Because the main $\alpha$-olefin was 1-hexene, this polyethylene resin had a notched Lander ESCR of 289 hours, which was relatively satisfactory. However, the value of T$\beta\delta$/T$\delta\delta$/Ca, which is an index to $\alpha$-olefin composition distribution, was as high as 0.16. This polyethylene resin had a wide composition distribution and was inferior to those in Examples 1 and 3.

[EXAMPLE 7] (Pipe Evaluation)

A pigment compound toned so as to have a blue color was incorporated into the polyethylene resin of Example 3. Two kinds of colored pipes (outer diameter, 110mm; wall thickness, 10 mm: outer diameter, 32 mm; wall thickness, 3 mm) as provided for in ISO 4427 were molded therefrom by the methods described above.
Of these pipes, the pipe having an outer diameter of 32 mm and a wall thickness of 3 mm was evaluated for MRS in accordance with ISO 9080 and ISO 12162. As a result, the lower confidence limit ($\sigma$LPL) of the predicted hydrostatic strength at 20°C for 50 years was 10.2 MPa, and MRS = 10 MPa (PE100).
On the other hand, the pipe having an outer diameter of 110 mm and a wall thickness of 10 mm were subjected to the notch pipe test in accordance with ISO 13479 under the conditions of a test temperature of 80°C and an internal pressure of 9.2 bar. The number of pipe samples tested was 5. As a result, the pipe gave highly excellent results in which none of the pipe broke in 17,000 hours in the test.
Furthermore, the pipe having an outer diameter of 110 mm and a wall thickness of 10 mm was subjected to the rapid crack propagation property test (RCP-S4) in accordance with ISO 13477 at a test temperature of 0°C. As a result, no crack propagation occurred even when the internal pressure of the pipe was elevated to 25 bar, and the pipe gave excellent results in which a critical pressure (Pc,$_{S4}$) could not be observed.
Correlation data on notched Lander ESCR and on notch pipe test are as shown in Table 3.

[Table 3]

| Correlation data on notched Lander ESCR and notch pipe test | | | | | | | |
|---|---|---|---|---|---|---|---|
| Test Method | Unit | Sample | | | | | |
| | | A | B | C | D | E | F |
| Notched Lander ESCR (80°C; 58.84 bar [60 kgf / cm$^2$]) | h | 285 | 332 | 251 | 11 | 38 | 99 |
| Notch Pipe Test (80°C; internal pressure, 9.2 bar) | h | 4,200 | 2,919 | 2,539 | 141 | 588 | 1,400 |

[EXAMPLE 8] (Pipe Evaluation)

A pigment compound toned so as to have a blue color was incorporated into the polyethylene resin of Example 4. Two kinds of colored pipes (outer diameter, 110 mm; wall thickness, 10 mm: outer diameter, 32 mm; wall thickness, 3 mm) as provided for in ISO 4427 were molded therefrom by the methods described above.
Of these pipes, the pipe having an outer diameter of 32 mm and a wall thickness of 3 mm was evaluated for MRS in accordance with ISO 9080 and ISO 12162. As a result, the lower confidence limit ($\sigma$LPL) of the predicted hydrostatic strength at 20°C for 50 years was 10.4 MPa, and MRS = 10 MPa (PE100).
On the other hand, the pipe having an outer diameter of 110 mm and a wall thickness of 10 mm was subjected to the notch pipe test in accordance with ISO 13479 under the conditions of a test temperature of 80°C and an internal pressure of 9.2 bar. As a result, the pipe gave excellent results in which the breaking time was 4,200 hours.

[COMPARATIVE EXAMPLE 8] (Pipe Evaluation)

A pigment compound toned so as to have a blue color was incorporated into the polyethylene resin of Comparative Example 1. The colored pipe having an outer diameter of 110 mm and a wall thickness of 10 mm as provided for in ISO 4427 was molded therefrom by the method described above. This pipe was subjected to the notch pipe test in accordance with ISO 13479 under the conditions of a test temperature of 80°C and an internal pressure of 9.2 bar. As a result, the pipe gave poor results in which the breaking time was about 900 hours.

[EXAMPLE 9] (Pipe Evaluation)

A pigment compound toned so as to have a blue color was incorporated into the polyethylene resin of Example 5. The colored pipe having an outer diameter of 110 mm and a wall thickness of 10 mm as provided for in ISO 4427 was molded therefrom by the method described above. This pipe was subjected to the notch pipe test in accordance with ISO 13479 under the conditions of a test temperature of 80°C and an internal pressure of 9.2 bar. As a result, the pipe gave results in which the breaking time was 450 hours.

[RESULTS OF EXAMPLES AND COMPARATIVE EXAMPLES]

The polyethylene resins obtained in Examples 1 to 6 have an excellent balance among flowability, rigidity, and durability because they each satisfy the requirements in the present invention: an HLMFR, a density, an $\alpha$-olefin content, and a breaking time measured by notched Lander ESCR.

In Comparative Examples 1 and 2, the polymerization temperatures in high-molecular weight component production are lower than in the Examples and the polymerization temperatures in low-molecular weight component production was equivalent to or more than in the Examples. Because of this, the relative copolymerizability of the 1-hexene is high in the polymerization for low-molecular weight component production. As a result, the value of ($\alpha$-olefin content in the low-molecular weight component)/($\alpha$-olefin content in the high-molecular weight component) exceeds 0.2. Consequently, the polyethylene resins have poor durability and the notched Lander ESCR thereof does not satisfy the relationship according to the present invention. In addition, the polyethylene resins of Comparative Examples 1 and 2 are inferior in notched Lander ESCR to the resins of the corresponding Examples, i.e., Examples 2 and 4.

Comparative Examples 3 to 6 employ 1-butene as the main $\alpha$-olefin. Because of this, the notched Lander ESCR does not satisfy the relationship according to the present invention. In addition, the polyethylene resins of Comparative Examples 3 to 6 are inferior in notched Lander ESCR to the polyethylene resin of Example 3, in which the HLMFR and $\alpha$-olefin content thereof are close to those of the resins of the Comparative Examples.

Furthermore, Comparative Example 7 employs 1-hexene as the main $\alpha$-olefin. However, the value obtained by dividing the ratio of chains where two $\alpha$-olefins are successive to chains where an $\alpha$-olefin is isolated by the $\alpha$-olefin content (= T$\beta\delta$/T$\delta\delta$/Ca) exceeds 0.15. Namely, the composition distribution is wide. Because of this, the notched Lander ESCR does not satisfy the relationship defined in claim 1. In addition, the polyethylene resin of Comparative Example 7 is inferior in notched Lander ESCR to the polyethylene resin of Example 3, in which the HLMFR and the $\alpha$-olefin content thereof are close to those of the resins of Comparative Example 7.

The results given above show that the polyethylene resin of the present invention gives molded pipe having remarkably improved durability as compared with, e.g., the related-art techniques shown in the Comparative Examples. The significance and rationality of the constitutions of the present invention have been demonstrated.

While the present invention has been described in detail and with reference to specific embodiments thereof, it will be apparent to one skilled in the art that various changes and modifications can be made therein without departing from the scope thereof.

This application is based on a Japanese patent application filed on May 23, 2005 (Application No. 2005-150272), the entire contents thereof being herein incorporated by reference.

INDUSTRIAL APPLICABILITY

The polyethylene resin of the present invention is a polyethylene resin excellent especially in slow crack growth (SCG) property. Like general-purpose polyethylene resins, the polyethylene resin of the present invention can be used in various applications of general-purpose polyethylenes, such as a container, a food packaging container, a tank, a bottle, various molded objects, a stretched or unstretched film, an agricultural film, an ultrathin film, a material, a binding tape, and a pipe. However, the polyethylene resin of the present invention has excellent properties when used especially as a highly durable resin in pipe applications and used in pipe and joint applications as specific applications. This polyethylene resin is usable in applications of general-purpose polyethylene, such as a water supply pipe, an oil supply pipe, a chemical supply pipe, a porous underdrain pipe, an filtration pipe, and a seawater pipe. However, the resin exhibits excellent properties especially in a wide range of applications in which the products come into contact with water, such as a water distribution pipe, a sewer pipe, and a pipe for rehabilitation. Furthermore, the polyethylene resin of the present invention has excellent properties not exhibited by general-purpose polyethylene resin, when used in an industrial field including a part necessary for concretely laying a pipe, for example, as a molding material for a joint and an elbow to be attached to the polyethylene pipe.

**Claims**

1. A polyethylene resin (A) for a pipe, which satisfies the following requirements (a) to (d):

   (a) a high-load melt flow rate (HLa) is 5 to 20 g/10 min;
   (b) a density (Da) is 0.945 to 0.965 g/cm$^3$ ;
   (c) a content of an $\alpha$-olefin having 3 to 12 carbon atoms (Ca) is 0.05 to 1.5 mol%; and
   (d) a breaking time (T) measured by notched Lander ESCR, the HLa, and the Ca satisfy the following formula:

$$\log T \geq -2.9 \times \log HLa + 5.1 \times \log Ca + 6.8$$

   wherein the polyethylene resin (A) comprises:
   (B) a polyethylene polymer having a high-load melt flow rate (HLb) of 0.01 to 3 g/10 min and a content of $\alpha$-olefin having 3 to 12 carbon atoms (Cb) of 3.0 mol% or lower, the amount ratio for polymerization (Xb) of the polymer (B) being 20 to 60% by weight; and
   (C) a polyethylene polymer having a melt flow rate (MFRc) of 1 to 1,000 g/10 min and a content of $\alpha$-olefin having 3 to 12 carbon atoms (Cc) of 0.5 mol% or lower, the amount ratio for polymerization (Xc) of the polymer (C) being 40 to 80% by weight;
   wherein the polyethylene polymer (B) and the polyethylene polymer (C) comprise a main $\alpha$-olefin having 6 or more and 12 or less carbon atoms, the main $\alpha$-olefin being the $\alpha$-olefin which gives short branches existing in a largest number;
   wherein the polyethylene polymer (C) and the polyethylene polymer (B) satisfy the following relationship:

   ($\alpha$-olefin content of the polyethylene polymer (C)) / ($\alpha$-olefin content of the polyethylene polymer (B)) $\leq$ 0.20;
   wherein the polyethylene resin (A) is one produced by a regular multistage polymerization which comprises:

   first producing the polyethylene polymer (B);
   subsequently transferring the reaction liquid containing the polyethylene polymer (B) to a next polymerization reaction vessel directly; and
   producing the polyethylene polymer (C);
   and wherein the polyethylene resin is one obtained by a multistage polymerization using a Ziegler catalyst.

2. The polyethylene resin of claim 1, wherein a value obtained by dividing a ratio of chains (T$\beta\delta$) where two main $\alpha$-olefins having 6 or more and 12 or less carbon atoms in the polyethylene resin are successive to chains (T$\delta\delta$) where a main $\alpha$-olefin having 6 or more and 12 or less carbon atoms in the polyethylene resin is isolated by the content of $\alpha$-olefin having 3 to 12 carbon atoms is 0.15 or smaller.

3. The polyethylene resin of claim 1 or 2, wherein the breaking time (T) measured by notched Lander ESCR, the HLa, and the Ca in the requirement (d) satisfy the following formula:

$$T \geq 10^{\wedge}(-2.9 \times \log HLa + 5.1 \times \log Ca + 6.8) + 50.$$

4. An article obtainable by molding the polyethylene resin of any of claims 1 to 3, wherein the article is selected from a pipe and a joint.

5. A process for producing a polyethylene resin for a pipe according to claim 1,

wherein producing a polyethylene polymer (B) having a high-load melt flow rate (HLb) of 0.01 to 3 g/10 min and a content of $\alpha$-olefins having 3 to 12 carbon atoms (Cb) of 3.0 mol% or lower, as a high-molecular weight component, in one or more preceding reactors in a polymerization apparatus comprising two or more serially connected reactors, using a Ziegler catalyst containing at least titanium and magnesium, wherein the polymer (B) is produced in an amount ratio for polymerization (Xb) of 20 to 60% by weight;

subsequently transferring the reaction liquid containing the polyethylene polymer (B) to a next reactor; and producing a polyethylene polymer (C) having a melt flow rate (MFRc) of 1 to 1,000 g/10 min and a content of $\alpha$-olefins having 3 to 12 carbon atoms (Cc) of 0.5 mol% or lower as a low-molecular weight component by a continuous suspension polymerization, wherein the polymer (C) is produced in an amount ratio for polymerization (Xc) of 40 to 80% by weight.

6. The process for producing a polyethylene resin of claim 5 , wherein the breaking time (T) measured by notched Lander ESCR, the HLa, and the Ca in the requirement (d) satisfy the following formula:

$$T \geq 10^{(-2.9 \times \log HLa + 5.1 \times \log Ca + 6.8)} + 50.$$

**Patentansprüche**

1. Ein Polyethylenharz (A) für ein Rohr, das die folgenden Anforderungen (a) bis (d) erfüllt:

(a) ein Hochlastschmelzindex (HLa) beträgt 5 bis 20 g/10 min;
(b) eine Dichte (Da) beträgt 0,945 bis 0,965 g/cm$^3$;
(c) ein Gehalt an einem $\alpha$-Olefin mit 3 bis 12 Kohlenstoffatomen (Ca) beträgt 0,05 bis 1,5 Mol-%; und
(d) eine Bruchzeit (T), bestimmt durch gekerbte Lander ESCR, der HLa und der Ca die folgende Formel erfüllen:

$$\log T \geq -2,9 \times \log HLa + 5,1 \times \log Ca + 6,8$$

wobei das Polyethylenharz (A) umfasst:
(B) ein Polyethylenpolymer mit einem Hochlastschmelzindex (HLb) von 0,01 bis 3 g/10 min und einem Gehalt an $\alpha$-Olefinen mit 3 bis 12 Kohlenstoffatomen (Cb) von 3,0 Mol-% oder weniger, wobei das Mengenverhältnis für die Polymerisation (Xb) des Polymers (B) 20 bis 60 Gewichts-% beträgt; und
(C) ein Polyethylenpolymer mit einer Schmelzflussrate (MFRc) von 1 bis 1.000 g/10 min und einem Gehalt an $\alpha$-Olefinen mit 3 bis 12 Kohlenstoffatomen (Cc) von 0,5 Mol-% oder weniger, wobei das Mengenverhältnis zur Polymerisation (Xc) des Polymers (C) 40 bis 80 Gew% beträgt;
wobei das Polyethylenpolymer (B) und das Polyethylenpolymer (C) ein Haupt-$\alpha$-Olefin mit 6 oder mehr und 12 oder weniger Kohlenstoffatomen umfassen, wobei das Haut-$\alpha$-Olefin das $\alpha$-Olefin ist, das die größte Anzahl an kurzen Verzweigungen ergibt;
wobei das Polyethylenpolymer (C) und das Polyethylenpolymer (B) die folgende Beziehung erfüllen:

($\alpha$-Olefingehalt des Polyethylenpolymers (C))/($\alpha$-Olefingehalt des Polyethylenpolymers (B)) $\leq$ 0,20;
wobei das Polyethylenharz (A) eines ist, das durch eine regelmäßige mehrstufige Polymerisation hergestellt ist, die umfasst:

zuerst Herstellen des Polyethylenpolymers (B);
anschließend Überführen der Reaktionsflüssigkeit, die das Polyethylenpolymer (B) enthält, direkt in ein nächstes Polymerisationsreaktionsgefäß; und
Herstellen des Polyethylenpolymers (C);
und wobei das Polyethylenharz eines ist, das durch eine mehrstufige Polymerisation unter Verwendung eines Zieglerkatalysators erhalten wird.

2. Das Polyethylenharz nach Anspruch 1, wobei ein Wert, der durch Dividieren eines Verhältnisses von Ketten (T $\beta\delta$), in denen zwei Haupt-$\alpha$-Olefine mit 6 oder mehr und 12 oder weniger Kohlenstoffatomen in dem Polyethylenharz aufeinanderfolgen, zu Ketten (T$\delta\delta$), in denen ein Haupt-$\alpha$-Olefin mit 6 oder mehr und 12 oder weniger Kohlenstoffatomen in dem Polyethylenharz isoliert ist, durch den Gehalt an $\alpha$-Olefinen mit 3 bis 12 Kohlenstoffatomen, 0,15 oder weniger beträgt.

3. Das Polyethylenharz nach Anspruch 1 oder 2, wobei die Bruchzeit (T), gemessen durch gekerbte Lander ESCR, der HLa und der Ca die Anforderung (d) der folgenden Formel erfüllen:

$$T \geq 10^{\wedge}(-2,9 \times \log HLa + 5,1 \times \log Ca + 6,8) + 50.$$

4. Ein Gegenstand, der erhältlich ist durch Formen des Polyethylenharzes nach einem der Ansprüche 1 bis 3, wobei der Gegenstand ausgewählt ist aus einem Rohr oder einer Verbindung.

5. Ein Verfahren zur Herstellung eines Polyethylenharzes für ein Rohr gemäß Anspruch 1, wobei das Herstellen eines Polyethylenpolymers (B) mit einem Hochlastschmelzindex (HLb) von 0,01 bis 3 g/10 min und einem Gehalt an $\alpha$-Olefinen mit 3 bis 12 Kohlenstoffatomen (Cb) von 3,0 Mol-% oder weniger, als eine Komponente mit hohem Molekulargewicht, in einem oder mehreren vorhergehenden Reaktoren in einer Polymerisationsvorrichtung, die zwei oder mehr in Reihe verbundene Reaktoren umfasst, unter Verwendung eines Ziegler-Katalysators, der mindestens Titan und Magnesium enthält, erfolgt, wobei das Polymer (B) in einem Mengenverhältnis zur Polymerisation (Xb) von 20 bis 60 Gewichts-% hergestellt wird; anschließend Überführen der Reaktionsflüssigkeit, die das Polyethylenpolymer (B) enthält, in einen nächsten Reaktor; und
Herstellen eines Polyethylenpolymers (C) mit einem Schmelzindex (MFRc) von 1 bis 1.000 g/10 min und einem Gehalt an $\alpha$-Olefinen mit 3 bis 12 Kohlenstoffatomen (Cc) von 0,5 Mol% oder weniger als eine Komponente mit niedrigem Molekulargewicht durch eine kontinuierliche Suspensionspolymerisation, wobei das Polymer (C) in einem Mengenverhältnis zur Polymerisation (Xc) von 40 bis 80 Gewichts-% hergestellt wird.

6. Das Verfahren zur Herstellung eines Polyethylenharzes nach Anspruch 5, wobei die Bruchzeit (T), gemessen durch gekerbte Lander ESCR, der HLa und der Ca in der Anforderung (d) die folgende Formel erfüllen:

$$T \geq 10^{\wedge}(-2,9 \times \log HLa + 5,1 \times \log Ca + 6,8) + 50.$$

**Revendications**

1. Résine de polyéthylène (A) pour un tuyau, laquelle satisfait les exigences (a) à (d) suivantes :

(a) une vitesse d'écoulement à l'état fondu sous charge élevée (HLa) est de 5 à 20 g/10 min ;
(b) une densité (Da) est de 0,945 à 0,965 g/cm$^3$;
(c) une teneur en oléfine-$\alpha$ ayant de 3 à 12 atomes de carbone (Ca) est de 0,05 à 1,5 % mol ; et
(d) un temps de rupture (T) mesuré par Lander ESCR entaillé, la HLa, et la Ca satisfont la formule suivante :

$$\log T \geq -2,9 \times \log HLa + 5,1 \times \log Ca + 6,8$$

dans laquelle la résine de polyéthylène (A) comprend :
(B) un polymère de polyéthylène ayant une vitesse d'écoulement à l'état fondu sous charge élevée (HLb) de 0,01 à 3 g/10 min et une teneur en oléfine-$\alpha$ ayant de 3 à 12 atomes de carbone (Cb) de 3,0 % en mol ou inférieure, le rapport de quantité pour la polymérisation (Xb) du polymère (B) étant de 20 à 60 % en poids ; et
(C) un polymère de polyéthylène ayant une vitesse d'écoulement à l'état fondu (MFRc) de 1 à 1 000 g/10 min et une teneur en oléfine-$\alpha$ ayant de 3 à 12 atomes de carbone (Cc) de 0,5 % en mol ou inférieure, le rapport de quantité pour une polymérisation (Xc) du polymère (C) étant de 40 à 80 % en poids ;
dans laquelle le polymère de polyéthylène (B) et le polymère de polyéthylène (C) comprennent une oléfine-$\alpha$ principale ayant 6 ou plus et 12 ou moins atomes de carbone, l'oléfine-$\alpha$ principale étant l'oléfine-$\alpha$ qui fournit de courtes ramifications existant dans en plus grand nombre ;

dans laquelle le polymère de polyéthylène (C) et le polymère de polyéthylène (B) satisfont la relation suivante :

(teneur en oléfine-$\alpha$ du polymère de polyéthylène (C))/(teneur en oléfine-$\alpha$ du polymère de polyéthylène (B)) $\leq$ 0,20 ;

dans laquelle la résine de polyéthylène (A) est une résine produite par une polymérisation régulière à étapes multiples qui comprend :

dans un premier temps la production du polymère de polyéthylène (B) ;
le transfert subséquent du liquide réactionnel contenant le polymère de polyéthylène (B) vers une cuve de réaction de polymérisation subséquente directement ; et
la production du polymère de polyéthylène (C) ;
et dans laquelle la résine de polyéthylène est une résine obtenue par une polymérisation à étapes multiples utilisant un catalyseur Ziegler.

2.  Résine de polyéthylène selon la revendication 1, dans laquelle une valeur obtenue par division d'un rapport de chaînes (T$\beta\delta$), dans lesquelles deux oléfines-$\alpha$ principales ayant 6 ou plus et 12 ou moins atomes de carbone dans la résine de polyéthylène sont successives, aux chaînes (T$\delta\delta$), dans lesquelles une oléfine-$\alpha$ principale ayant 6 ou plus et 12 ou moins atomes de carbone dans la résine de polyéthylène est isolée, par la teneur en oléfine-$\alpha$ ayant de 3 à 12 atomes de carbone, est de 0,15 ou inférieure.

3.  Résine de polyéthylène selon la revendication 1 ou 2, dans laquelle le temps de rupture (T) mesuré par Lander ESCR entaillé, la HLa, et la Ca dans l'exigence (d) satisfont la formule suivante :

$$T \geq 10^{\wedge}(-2,9 \times \log HLa + 5,1 \times \log Ca + 6,8) + 50.$$

4.  Article pouvant être moulé par moulage de la résine de polyéthylène selon l'une quelconque des revendications 1 à 3, dans lequel l'article est choisi parmi un tuyau et un joint.

5.  Procédé de production d'une résine de polyéthylène pour un tuyau selon la revendication 1, dans lequel la production d'un polymère de polyéthylène (B) présentant une vitesse d'écoulement à l'état fondu sous charge élevée (HLb) de 0,01 à 3 g/10 min et une teneur en oléfines-$\alpha$ ayant de 3 à 12 atomes de carbone (Cb) de 3,0 % en mol ou inférieure, comme constituant de masse moléculaire élevée, dans un ou plusieurs réacteurs précédents dans un appareil de polymérisation comprenant deux ou plusieurs réacteurs connectés en série, en utilisant un catalyseur Ziegler contenant au moins du titane et du magnésium, dans lequel le polymère (B) est produit dans un rapport de quantité pour une polymérisation (Xb) de 20 à 60 % en poids ;
le transfert subséquent du liquide réactionnel contenant le polymère de polyéthylène (B) vers un réacteur subséquent ; et
la production d'un polymère de polyéthylène (C) présentant une vitesse d'écoulement à l'état fondu (MFRc) de 1 à 1 000 g/10 min et une teneur en oléfines-$\alpha$ ayant de 3 à 12 atomes de carbone (Cc) de 0,5 % en mol ou inférieure comme constituant de faible masse moléculaire par une polymérisation en suspension continue, dans lequel le polymère (C) est produit dans un rapport de quantité pour une polymérisation (Xc) de 40 à 80 % en poids.

6.  Procédé de production d'une résine de polyéthylène selon la revendication 5, dans lequel le temps de rupture (T) mesuré par Lander ESCR entaillé, la HLa, et la Ca dans l'exigence (d) satisfont la formule suivante :

$$T \geq 10^{\wedge}(-2,9 \times \log HLa + 5,1 \times \log Ca + 6,8) + 50$$

[Fig. 1]

CORRELATION BETWEEN NOTCHED LANDER

ESCR AND NOTCH PIPE TEST

[Fig. 2]

RELATIONSHIP BETWEEN NOTCHED LANDER

ESCR AND VALUE OF RIGHT-HAND SIDE

EQUATION = 10^(-2.9logHL + 5.1logCa + 6.8) + 50

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 8301933 A
- JP 2000109521 A
- JP 9286820 A
- JP 11228635 A
- JP 2003064187 A
- JP 2002519496 T
- JP 2003504442 T
- JP 2003531233 T
- JP 11199719 A
- EP 1584852 A

- US 2003088021 A
- EP 0533154 A
- JP 07258326 B
- JP 7258327 A
- JP 2003105016 A
- JP 53078287 A
- JP 54021483 A
- JP 55071707 A
- JP 58225105 A
- JP 2005150272 A

**Non-patent literature cited in the description**

- **ERIC T. HSIEH ; JAMES C. RANDALL.** *Macromolecules,* 1982, vol. 15, 353-360
- **ERIC T. HSIEH ; JAMES C. RANDALL.** *Macromolecules,* 1982, vol. 15, 1402-1406

- **ATSUSHI KAJI ; YOSHIKO AKIMOTO ; MASAO MURANO.** *J. Polym. Sci. Part A: Polym. Chem.,* 1991, vol. 29, 1987-1990